# EUROPEAN PATENT APPLICATION

(11) **EP 4 407 887 A1**
(43) Date of publication of application: **31.07.2024**
(21) Application number: 23153040.3
(22) Date of filing: 24.01.2023
(51) Int. Cl.: H04B 7/06

(54) **USER EQUIPMENT AND BASE STATION INVOLVED IN REPORTING OF PREDICTION RESULTS**

(71) Applicant: Panasonic Intellectual Property Corporation of America, Torrance, CA 90504 (US)
(72) Inventor: KUANG, Quan, 63225 Langen (DE); SUZUKI, Hidetoshi, Kadoma-shi, 571-5801 (JP)
(74) Representative: Grünecker Patent- und Rechtsanwälte PartG mbB

(57) **Abstract**

The present disclosure relates to a user equipment, UE, comprising the following. A receiver of the UE receives, from a base station, configuration information dedicated for prediction reporting and not for measurement reporting. The received prediction-dedicated configuration information configures one or more of:
- prediction characteristics of a beam that are to be reported from the UE to the base station, and
- a reporting set of beams identifying beams for which predicted characteristics are to be reported from the UE to the base station.

A processor of the UE predicts characteristics of a first set of beams, based on the received prediction-dedicated configuration information. A transmitter of the UE transmits, to the base station, a prediction report including the predicted characteristics of one or more beams.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing procedures for a UE to perform improved prediction result reporting procedures.

In an embodiment, the techniques disclosed here feature a user equipment, UE, comprising the following. A receiver of the UE receives, from a base station, configuration information dedicated for prediction reporting and not for measurement reporting. The received prediction-dedicated configuration information configures one or more of:
- prediction characteristics of a beam that are to be reported from the UE to the base station, and
- a reporting set of beams identifying beams for which predicted characteristics are to be reported from the UE to the base station.

A processor of the UE predicts characteristics of a first set of beams, based on the received prediction-dedicated configuration information. A transmitter of the UE transmits, to the base station, a prediction report including the predicted characteristics of one or more beams. It should be noted that general or specific embodiments may be implemented as a system, a method, an integrated circuit, a computer program, a storage medium, or any selective combination thereof. For instance, an integrated circuit can control a process of a UE or base station.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: is a schematic drawing that shows a functional split between NG Radio Access Network (NG-RAN) and 5G Core Network (5GC), to which the improved procedures of the present disclosure may be applied,
- **Fig. 3**: is a sequence diagram for Radio Resource Control (RRC) connection setup/reconfiguration procedures to which the improved procedures of the present disclosure may be applied,
- **Fig. 4**: is a schematic drawing showing usage scenarios of eMBB, mMTC and URLLC to which the improved procedures of the present disclosure may be applied,
- **Fig. 5**: is a block diagram showing an exemplary 3GPP NR system architecture for a non-roaming scenario,
- **Fig. 6**: illustrates a simplified and exemplary implementation of a set of synchronization signal blocks distributed in a half-frame,
- **Fig. 7**: illustrates several beams and the corresponding SSB index, SSB1-SSB8, and how the beams are transmitted by the gNB in a beam-sweeping manner,
- **Fig. 8**: illustrates a signaling diagram for CSI measurement and reporting,
- **Fig. 9**: illustrates an example of a spatial relationship between multiple beams, wherein a second set of beams (Set B) is a subset of a first set of beams (Set A),
- **Fig. 10**: illustrates an example of a spatial relationship between multiple beams, wherein a first set of beams (Set A) is different from a second set of beams (Set B),
- **Fig. 11**: illustrates an exemplary and simplified structure of a UE and a gNB,
- **Fig. 12**: illustrates a structure of the UE according to an exemplary implementation of the improved prediction result reporting procedure,
- **Fig. 13**: illustrates a flow diagram for the UE behavior according to an exemplary implementation of the improved prediction result reporting procedure,
- **Fig. 14**: illustrates a structure of the base station according to an exemplary implementation of the improved prediction result reporting procedure,
- **Fig. 15**: illustrates a flow diagram for the base station behavior according to an exemplary implementation of the improved prediction result reporting procedure, and
- **Fig. 16**: is a signaling diagram illustrating an exemplary exchange between the UE and the gNB for an exemplary implementation of the improved prediction result reporting procedure.

### DETAILED DESCRIPTION

### 5G NR system architecture and protocol stacks

3GPP has been working at the next release for the 5^{th} generation cellular technology, simply called 5G, including the development of a new radio access technology operating in frequencies ranging up to 100 GHz. The first version of the 5G standard was completed at the end of 2017, which allows proceeding to 5G NR standard-compliant trials and commercial deployments of smartphones.

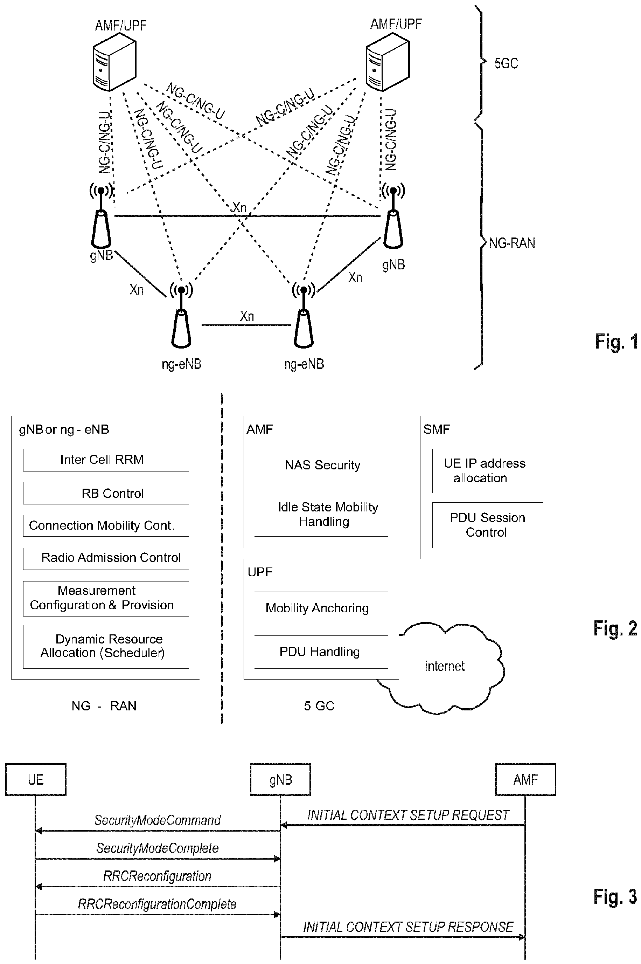

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the 5GC, more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in **Fig. 1** (see e.g., 3GPP TS 38.300 e.g., v17.2.0, section 4).

The user plane protocol stack for NR (see e.g., 3GPP TS 38.300, section 4.4.1) comprises the PDCP (Packet Data Convergence Protocol, see section 6.4 of 3GPPTS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g., sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 e.g., v17.4.0, e.g., section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g., packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see 3GPP TS 38.300).

RRC is a higher layer signaling (protocol) used for UE and gNB configuration. In particular, this transition may involve that the AMF prepares the UE context data (including e.g., PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5GC is provided that comprises circuitry which, in operation, establishes a Next Generation (NG) connection with a gNodeB; and a transmitter which, in operation, transmits an initial context setup message, via the NG connection, to the gNodeB to cause a signaling radio bearer setup between the gNodeB and a user equipment (UE). In particular, the gNodeB transmits an RRC signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

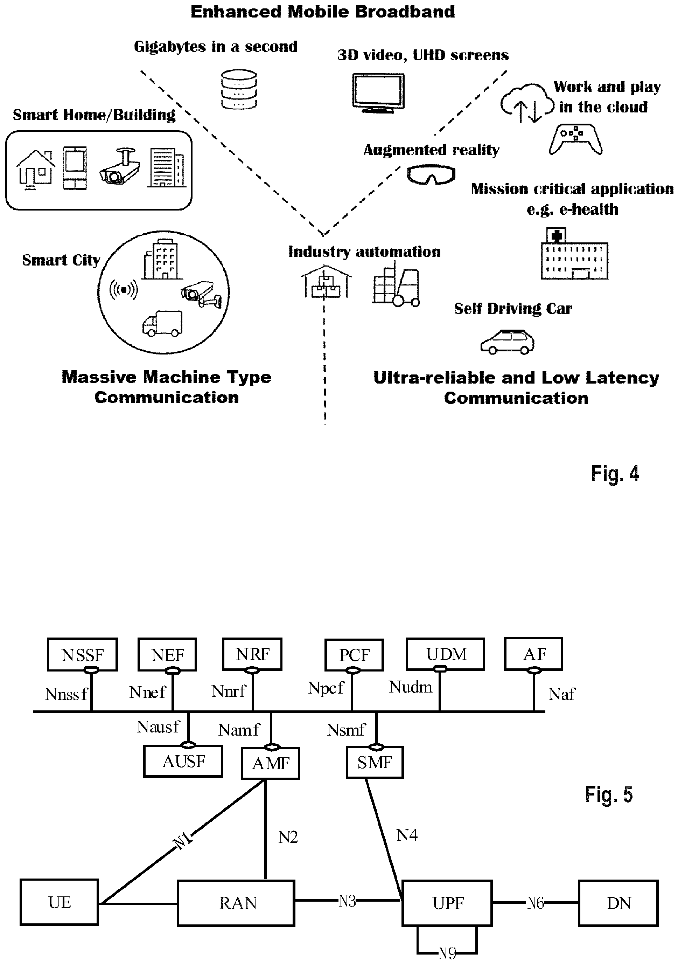

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g., ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by 3GPP TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g., as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g., 3GPP TS 23.501 e.g., v16.9.0, section 4.2.3, see also v17.5.0 or v18.0.0). An Application Function (AF), e.g., an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and circuitry, which, in operation, performs the services using the established PDU session.

### Multiple transmission and reception points

5G wireless networks are expected to support massive connectivity, high capacity, ultra-reliability and low latency. Such diverse use case scenarios require disrupting approaches for the realization of future 5G systems. It is envisioned that multiple transmission and reception points (multi-TRPs) will be vital in 5G in order to improve reliability, coverage, and capacity performance through flexible deployment scenarios.

Users on a cell-edge are usually served with a low quality-of-Service (QoS) due to the comparatively long distance from the base station and unfavorable channel conditions (e.g., intercell interference (ICI) from neighboring base stations). Multi-TRP is a technology that has been studied in fourth-generation mobile communication to alleviate the ICI via dynamic coordination between the multi-TRPs, to provide joint scheduling and transmissions/receptions. In this way, a wireless device at the cell edge can be served by multi-TRPs to improve its signal transmission/reception, resulting in increased throughput.

Multi-TRPs is a feature that enables a gNB to use more than one TRP to communicate with a UE. There are a couple of different ways for this type of communication, and it can be summarized as in the following situations. A first TRP and a second TRP may transmit two different PDSCH, but a control signal (PDCCH/DCI) for the two PDSCH is transmitted by the first TRP only. In this case, if there is some problem in the radio link with the first TRP and PDCCH reception fails, the communication via the second TRP is impacted as well. Further, when the first TRP and the second TRP are transmitting two different PDSCH and each TRP is transmitting its own corresponding PDCCH/DCI, if there is any problem in radio link with one of the TRPs, the communication via the other TRP can be intact. Still further, the first TRP and the second TRP may jointly process a DL and UL signal.

High carrier frequencies (e.g., millimeter waves) in 5G facilitate deployment of a large number of antennas (e.g., so called massive-MIMO) at the base-station, which requires beam management procedures for multi-TRP technology.

### Transmission Configuration Indicator states and Quasi-Co-Location

As per 3GPP TS 38.214: "Physical layer procedures for data (Release 17)", v. 17.3.0, September 2022, two reference signals can have a quasi-co-located, QCL, relationship. Two antenna ports are said to be quasi co-located if properties of the channel over which a symbol on one antenna port is conveyed can be inferred from the channel over which a symbol on the other antenna port is conveyed.

In 5G NR systems, a transmission configuration indication (TCI) state is used to establish the quasi co-location (QCL) connection between a target reference signal (RS) and a source RS. The antenna ports QCL types are defined below:

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

TCI states are configured for PDCCH, PDSCH and channel state information reference signals (CSI-RS) in order to convey the QCL indication for the respective RS. In frequency range 1 (FR1, below 7.125 GHz) QCL Types A-C and in frequency range 2 (FR2, above 24.250 GHz) QCL types A-D are applicable. The QCL Type D for FR2 indicates that PDCCH/PDSCH/CSI-RS is transmitted with the same spatial filter as the reference signal associated with that TCI. In FR2, the network can indicate a transmit beam change for PDSCH or PDCCH by switching the TCI state.

Each TCI state can include a TCI state identifier, TCI state ID, and a RS set, or one or more individual RS(s), which are used for QCL reference. Each RS within a TCI state can be associated with a set of one or more Tx (transmit) and/or Rx (receive) beams.

### Synchronization Signal Block measurement timing configuration - SMTC - PSS/SSS, PBCH

NR has introduced the so-called synchronization signal block, SS block (SSB), which comprises a Primary Synchronization Signal (PSS), a Secondary Synchronization Signal (SSS), and a Physical Broadcast CHannel (PBCH) (in fact PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.4.0 sections 7.4.2.2 and 7.4.2.3, including the respective sequence generation and mapping to physical resources.

The time-frequency structure of an SS/PBCH block, carrying the SSS is described in the TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

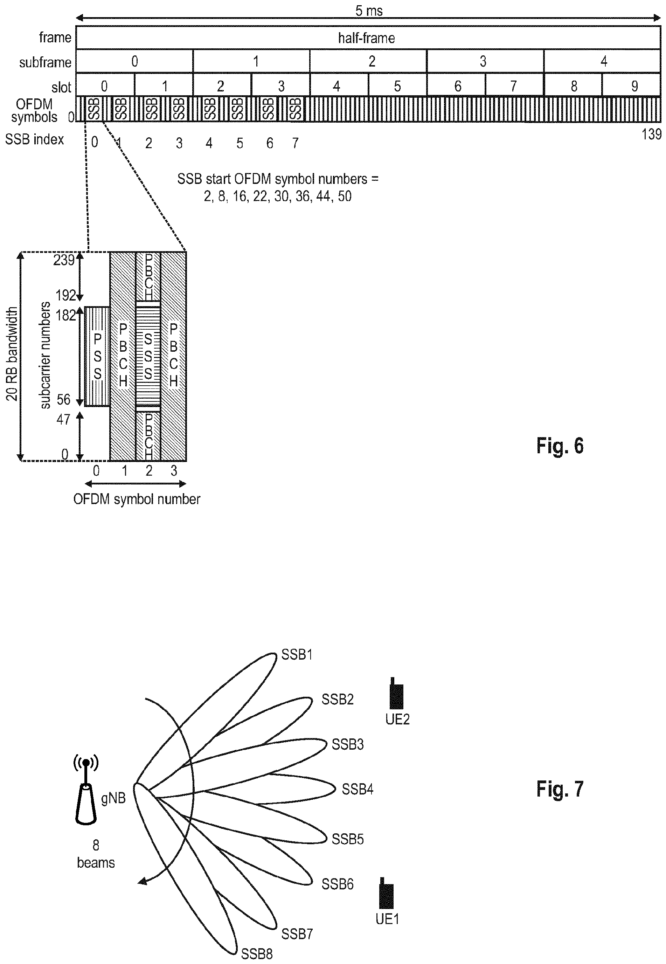

A simplified and exemplary illustration of the SSB according to the above definitions is illustrated in **Fig. 6****,** which shows at the bottom part the PSS, SSS, and PBCH in the time and frequency domain.

The timing (OFDM symbols) at which the SS-blocks (see Fig. 6) are transmitted by the gNB can be defined differently. In particular, the first symbol indexes (within each half-frame with an SSB) with which a candidate SSB starts is determined according to 3GPP 38.213 v17.4.0, section 4.1 "Cell search". An example set of SSBs is illustrated in Fig. 6, assuming start OFDM symbols of 2, 8, 16, 22, 30, 36, 44, and 50 (case of SCS=30 kHz, and frequency > 3 GHz), wherein the relevant OFDM symbol numbering starts with 0 in a half frame. The number of SSBs in a set of SSBs can also be limited to a maximum Lmax. In one example, the SSB set can comprise 4, 8 or 64 SSBs.

The candidate SS/PBCH blocks in a half frame (e.g. termed a set of SSBs) are indexed in an ascending order in time from 0 to *Lmax* - 1. Correspondingly, each SSB within a set of SSBs is assigned a unique number (starting from 0 and increasing by 1).

The SSB set illustrated in Fig. 6 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

All the SSBs can be transmitted with all beams in the system. Alternatively, the SSBs can be transmitted in different beams, e.g. when SSB beamforming is enabled. In that case, each SSB is transmitted on a different spatial beam, as illustrated in **Fig. 7****.** Similar to the exemplary assumption of Fig. 6, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanisms, such as for serving cell measurements, time / frequency synchronization etc.

### Beam management

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into three main procedures:
- initial beam establishment,
- beam adjustment (also called beam tracking and refining), and
- beam failure recovery, details of which will be described below.

These procedures will be briefly explained below.

### Initial beam establishment

Initial beam establishment includes the procedures and functions by which a beam pair is initially established in the downlink (DL) and uplink transmission (UL) directions, for example, when a connection is established. In the current 5G NR standard, this is done via beam sweeping, where different SSBs that are associated with different transmission, Tx, beams are transmitted in different OFDM symbols.

During beam sweeping, a gNB transmits beams in all directions in a burst at regularly defined intervals. Whenever a UE is synchronizing with the network, it reads the synchronization signal block, SSB, and extracts the primary synchronization signal, PSS, the secondary synchronization signal, SSS, the physical broadcast channel, PBCH, and the demodulation reference signal, DMRS.

A single SS block spans four OFDM symbols in time and 240 subcarriers in frequency (20 resource blocks) (see Fig. 6). Each SS block corresponds to a specific beam, beamformed in a different direction. A group of SS blocks forms one SS burst set that spans a 5ms window. The SS burst is repeated periodically with a period of 20 ms, wherein the maximum number of SS blocks in a SS burst set is dependent on the operating frequency range.

The UE can then search for the strongest DL Tx beam, e.g. by adjusting the corresponding DL reception, Rx, beam at the UE side as well, and then report the selection via a corresponding RACH occasion and preamble to the gNB. In this way, the initial beam pair is established, which may remain valid after a connection is set up until a new beam indication is received by UE.

### Beam adjustment

After the initial beam pair has been established, the beam pair may be constantly adjusted, in order to account for a movement of the UE and/or a change of the environment. This may be referred to as beam adjustment. In addition, beam management can also include refining the beam shape, for example using a narrower CSI-RS beam compared to a relatively wider SSB beam used for initial beam establishment.

The UE measures the beam strength by measuring received signal power. In idle mode, it is based on the synchronization signals, and in connected mode, it can be based on the channel state information reference signal, CSI-RS, in DL and sounding reference signal, SRS, in UL. The UE searches for the best beam periodically using predefined threshold criteria defined by the gNB and identifies the beam that has highest reference signal received power, RSRP. The UE may then perform a beam reporting procedure.

As beam adjustment does not happen simultaneously at the gNB and UE, one beam per procedure - identified by their index - is the outcome that may be used for UL or DL communication. The gNB may use information and recommendations from the UE to enhance beam adjustment. Transmission of control signaling and data may benefit from the beams selected in the process, because beam adjustment aims at improving the link quality based on ever-changing radio channel conditions. The gNB is in charge of deciding which UL Rx and DL Tx beams it is going to use and of indicating the UE about them. Upon knowing the beams the gNB is using, the UE is able to select their own ULTx and DL Rx beams.

### Beam failure recovery

Beam failure may happen if the beam cannot be tracked by the beam adjustment procedure described above. This can be the case, for example, when the current beam pair is suddenly blocked unexpectedly, and the beam tracking function cannot react quickly enough. Once a beam failure has occurred, beam recovery typically requires the following steps:
- beam-failure detection,
- candidate-beam identification,
- recovery-request transmission, and
- network response to the beam-recovery request.

For example, in the case of beam failure due to a poor channel condition, the beam recovery process is triggered to get back a new beam. The UE monitors the reference signal(s) and identifies the beam failure once the failure trigger conditions are met. The UE chooses the next best beam for sending in a random access (RA) preamble when the beam failure happens. If a first attempt of the RA fails, it sweeps to another beam for another RA procedure. The RA preamble is sent in the PRACH. Finally, the UE receives a downlink resource allocation and an uplink grant on the physical downlink control channel, PDCCH.

### Beam measurement and reporting

General operations performed during one or more of said main procedures may involve one or more of:
- *beam sweeping,* i.e., covering a spatial area with a set of beams transmitted and received according to pre-specified intervals and directions,
- *beam measurement,* i.e., the evaluation of the quality of the received signal at the gNB or at the UE,
- *beam determination,* i.e., the selection of the suitable beam or beams either at the gNB or at the UE, according to measurements obtained with the beam measurement procedure, and
- *beam reporting,* i.e., a procedure used by the UE to send beam quality and beam decision information to the gNB.

In brief, beam reporting involves that the UE measures a set of reference signals (e.g. SSB, or CSI-RS), corresponding to different downlink Tx beams. The UE then reports these measurements to the network (e.g. the serving gNB). Based on the received measurements, the network can then e.g. decide a suitable downlink Tx beam for the UE.

The measurement and reporting can be e.g. based on the CSI reporting framework, which generally can be considered to involve two parts, one for configuration and another one for the triggering of the CSI reporting.

There are two types of reference signals that can be used for the measurements, the SSB and the CSI-RS. The SSB is always transmitted by the network and is not specific to a UE and is thus unflexible. For instance, the SSB can be used in connection with a comparatively wide beam. On the other hand, the CSI-RS can be specifically configured for a UE, and is quite flexible regarding when and how often it is transmitted (time domain) and regarding the frequency-domain resources. The CSI-RS can be used in connection with a comparatively narrow beam, because it can be configured for only one or a few UEs.

There are several components of CSI in NR (i.e, several different types of CSI), e.g. based on 3GPP TS 38.214 - section 5.2.1 thereof:.
- CQI (Channel Quality Information)
- PMI (Precoding Matrix Indicator)
- CRI (CSI-RS Resource Indicator)
- SSBRI (SS/PBCH Resource Block Indicator)
- LI (Layer Indicator)
- RI (Rank Indicator)
- L1-RSRP, and/or
- Capability Index

One or more or a combination of different metrics can be reported by the UE. Generally, the metrics can be grouped into two types:
- L1-RSRP-related quantities (e.g. cri-RSRP and ssb-Index-RSRP, see later IE *CSI-Report Config)*
- CSI-related quantities (e.g. the rest from the IE *CSI-Report Config)*

The L1-RSRP-related quantities are new ones introduced for the first time in NR (Rel-15) and one purpose is to facilitate beam management. By contrast, the CSI-related quantities (such as CQI) are traditional ones, existing in LTE already. Those traditional CSI-related quantities are used by the base station to choose e.g. the proper MIMO precoding, modulation and coding size, etc. to match the channel condition.

Among several lEs for configuration, the IE *CSI-ReportConfig* is used to configure the CSI reporting. Generally speaking, each CSI reporting configuration describes/indicates:
- The quantity or a set of quantities to be reported. One possible reporting quantity is L1-RSRP-related (such as the "*cri-RSRP*" or the *"ssb-Index-RSRP",* see 3GPP TS 38.214, v17.4.0, section 5.2.1.4.2 thereof).
- The downlink resources on which measurements should be performed in order to derive the quantity or quantities to be reported.
- How the actual reporting is to be carried out, e.g. reporting timing and uplink channel to use for the reporting.

A device can be configured with one or several resource sets (e.g. CSI-RS, e.g. NZP-CSI-RS-ResourceSets). Each such resource set includes references to one or several configured CSI-RS. The gNB also configures whether reference signals in the resources of the resources set are transmitted periodically, aperiodically or semi-persistently.

The resource set can then be used as part of report configurations describing measurements and corresponding reporting to be done by a device. In a 5G-compliant example, the resource sets on which the measurements are performed are defined based on one or more of the following lEs derived from 3GPP TS 38.331:
- *CSI-ResourceConfigID,* being included in the *CSI-ReportConfig* IE, identifies a CSI-*ResourceConfig* IE to be used,
- *CSI-ResourceConfig* IE in turn defines a group of one or more resources sets, including *NZP-CSI-RS-ResourceSet, CSI-IM-ResourceSet,* and/or *CSI-SSB-ResourceSet,* respectively identified by suitable IDs (see e.g. *NZP-CSI-RS-ResourceSetld, CSI-IM-ResourceSetld,* and/or *CSI-SSB-ResourceSetld)*
- The resource sets respectively define the resources, e.g. based on the lEs *NZP-CSI-RS-Resource, CSI-IM-Resource,* and/or *SSB-Index*

Measurements and reporting can be carried out on a periodic, semi-periodic or aperiodic basis.

The measurements results are reported by the UE to the gNB, e.g. as uplink control information on the PUCCH or the PUSCH. In one 5G compliant example, the CSI reporting is performed by the UE based on the definitions given in 3GPP TS 38.212 v17.4.0, in section 6.3. In more detail, for the CSI report for beam management (e.g. containing the L1-RSRP-related metrics), the tables 6.3.1.1.2-6, 6.3.1.1.2-8, and 6.3.1.1.2-8B of 3GPP TS 38.212 are the most relevant.

The following exemplary definition of the IE CSI-ReportConfig is obtained from the 3GPP TS 38.331:

### - CSI-ReportConfig

The IE *CSI-ReportConfig* is used to configure a periodic or semi-persistent report sent on PUCCH on the cell in which the *CSI-ReportConfig* is included, or to configure a semi-persistent or aperiodic report sent on PUSCH triggered by DCI received on the cell in which the *CSI-ReportConfig* is included (in this case, the cell on which the report is sent is determined by the received DCI). See TS 38.214 [19], clause 5.2.1.

### CSI-ReportConfig information element

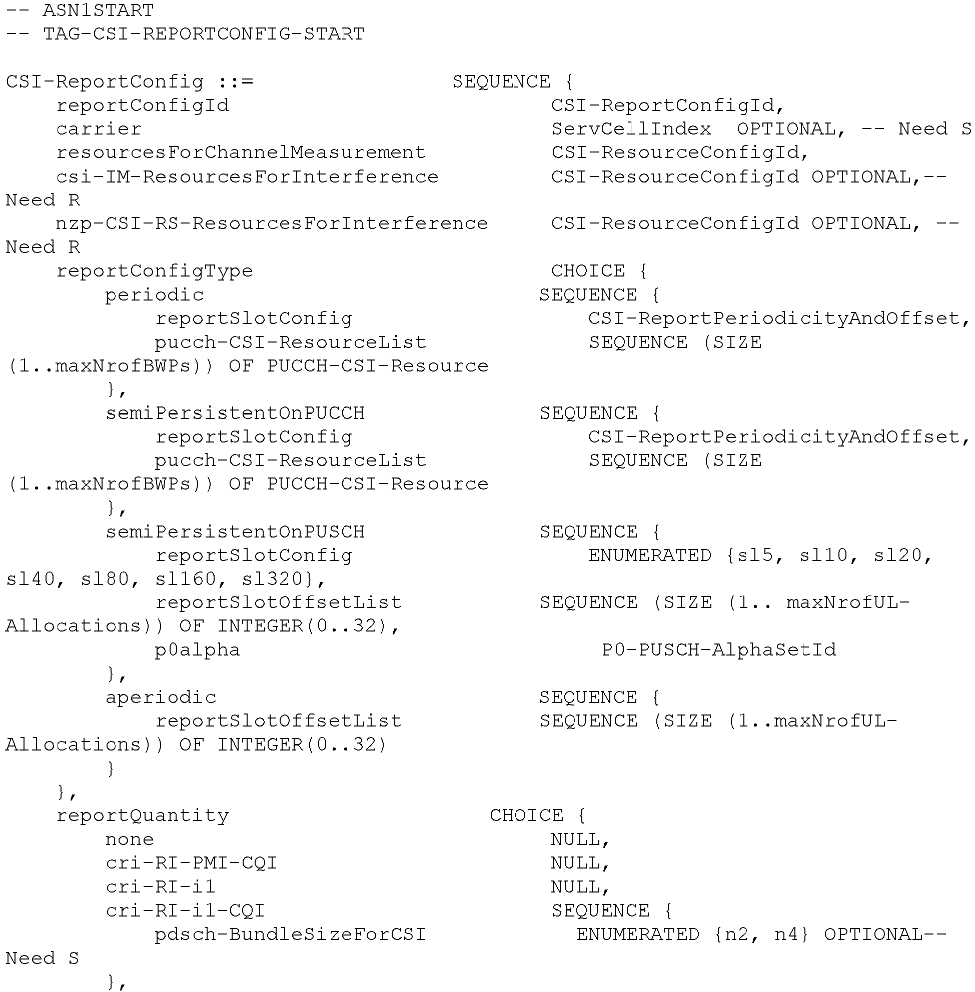

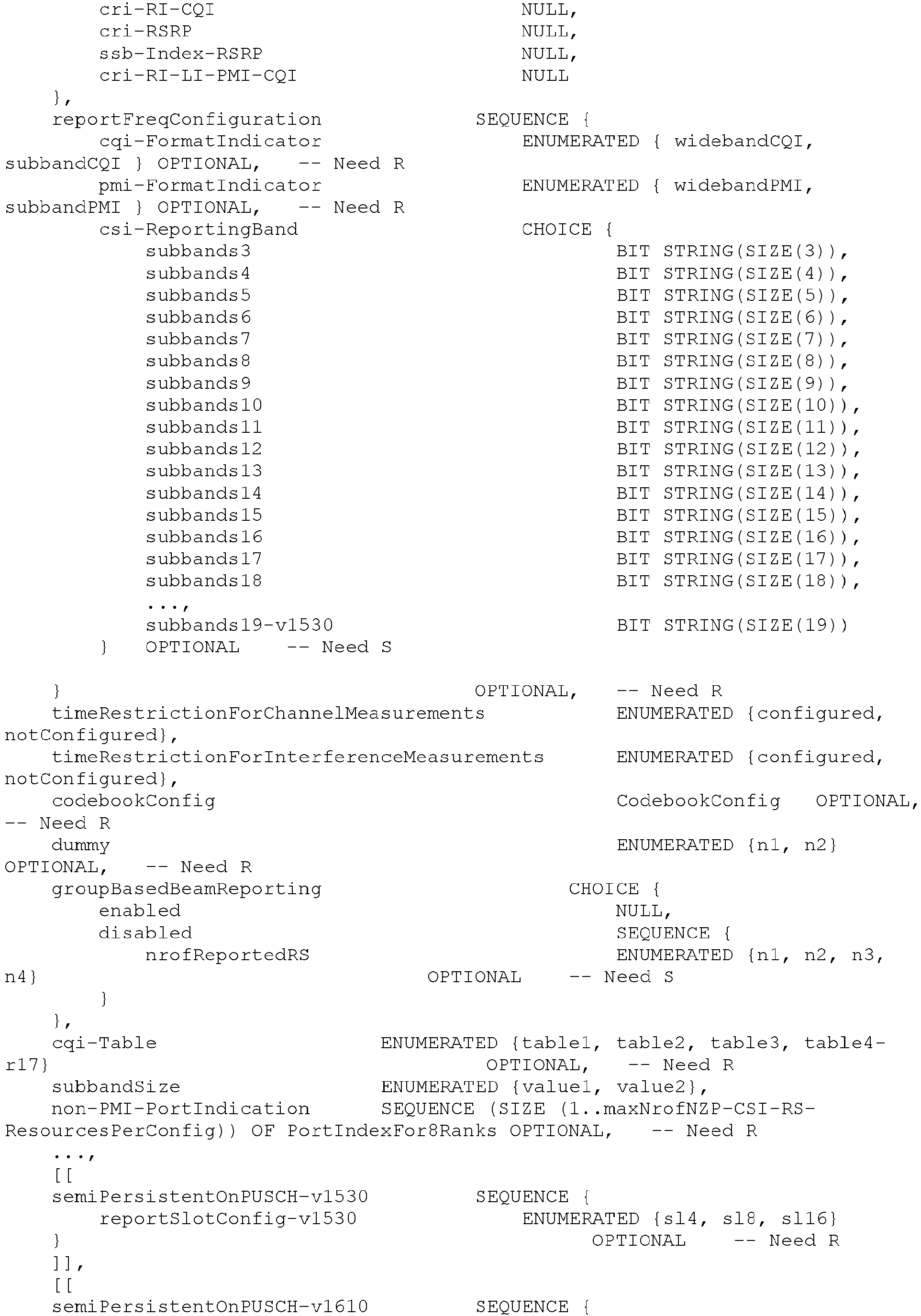

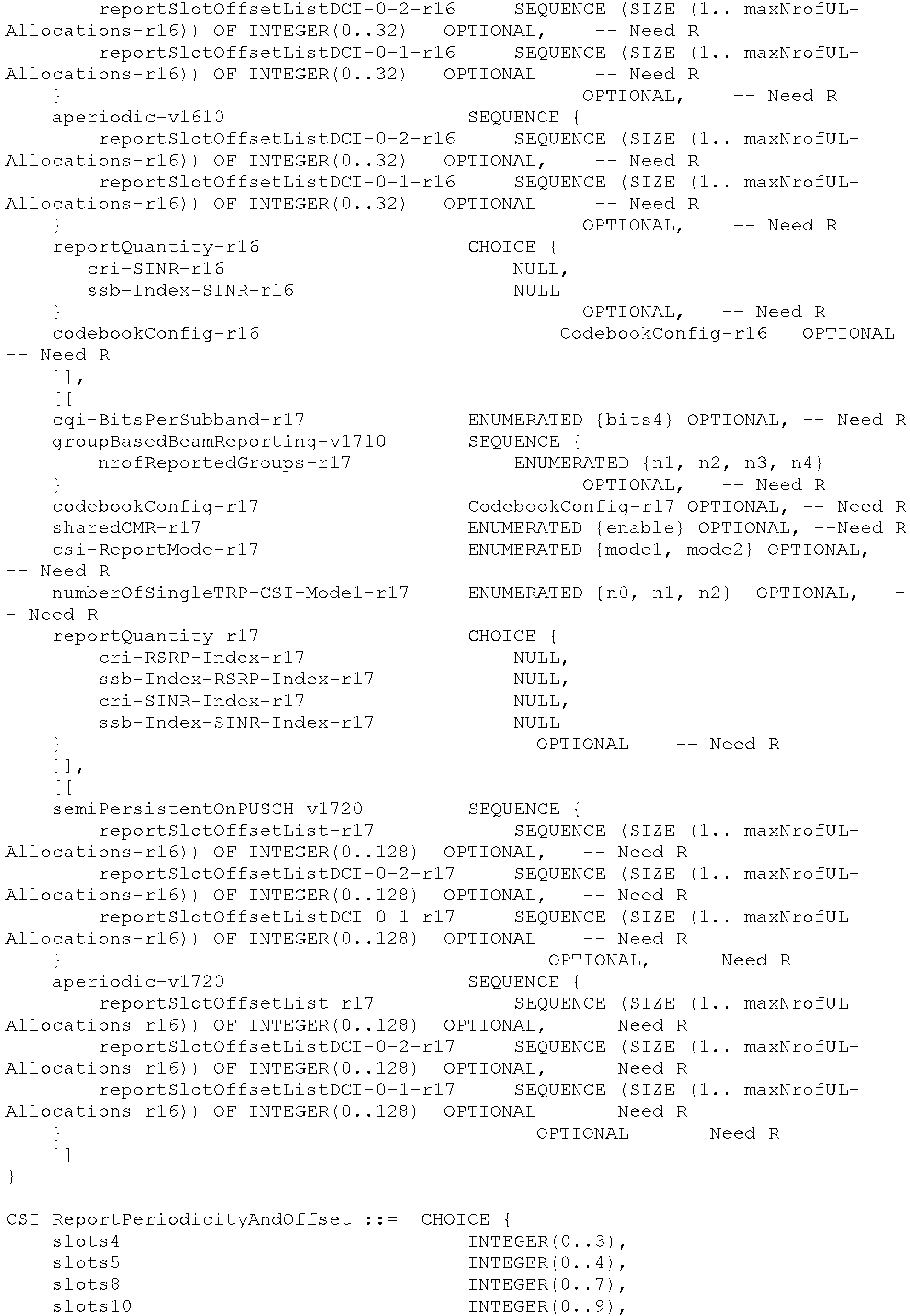

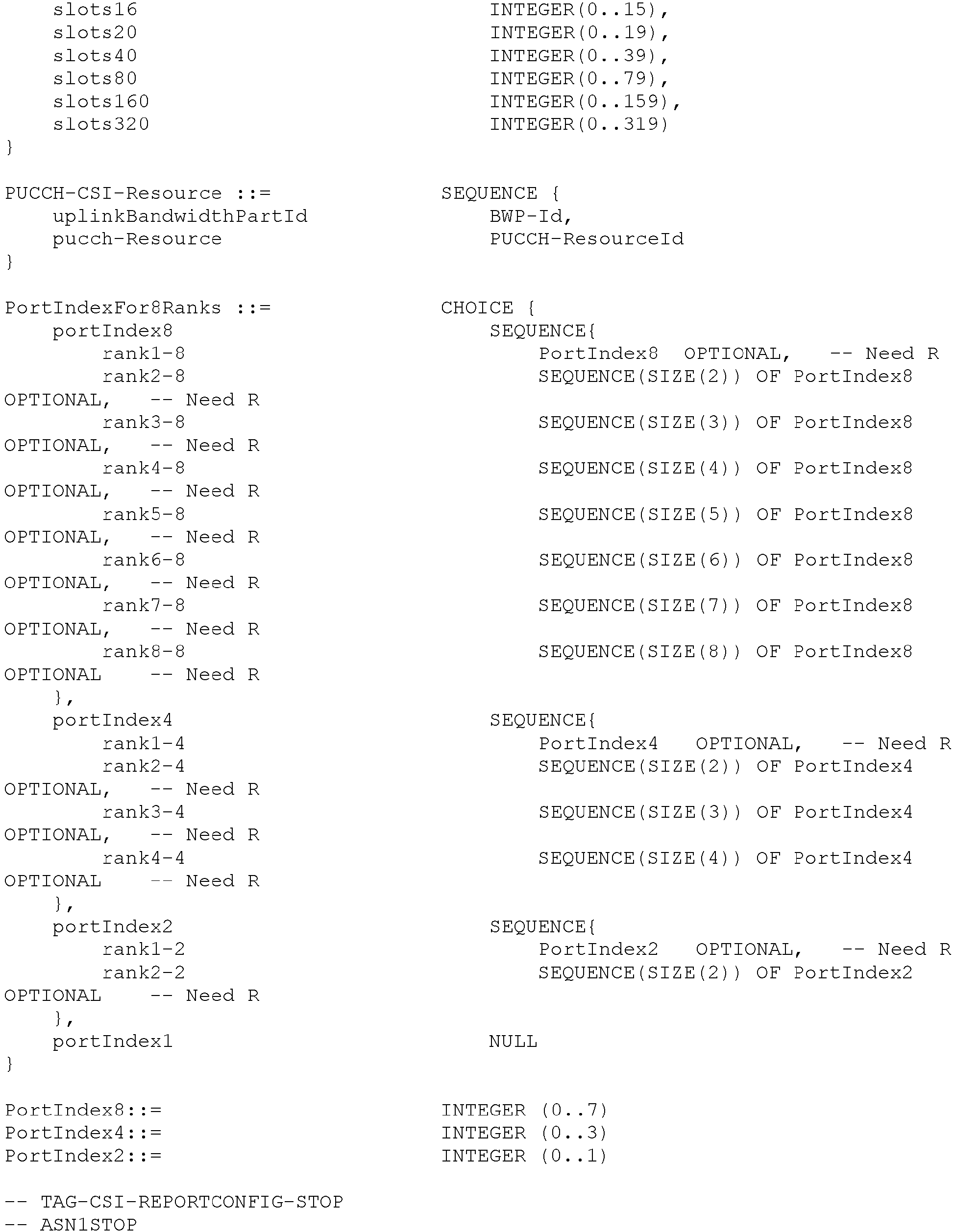

| ***CSI-ReportConfig* field descriptions** |
|---|
| ***carrier*** |
| Indicates in which serving cell the *CSI-ResourceConfig* indicated below are to be found. If the field is absent, the resources are on the same serving cell as this report configuration. |

| ***codebookConfig*** |
|---|
| Codebook configuration for Type-1 or Type-2 including codebook subset restriction. Network can only configure one of *codebookConfig, codebookConfig-r16* or *codebookConfig-r17* to a UE. |

| ***cqi-BitsPerSubband*** |
|---|
| This field can only be present if *cqi-Formatlndicator* is set to *subbandCQI.* If the field is configured with *bits4,* the UE uses 4-bit sub-band CQI. If the field is not present and *cqi-Formatlndicator* is set to *subbandCQI,* the UE uses 2-bit sub-band differential CQI. |

| ***cqi-Formatlndicator*** |
|---|
| Indicates whether the UE shall report a single (wideband) or multiple (subband) CQI (see TS 38.214 [19], clause 5.2.1.4). |

| ***cqi-Table*** |
|---|
| Which CQI table to use for CQI calculation (see TS 38.214 [19], clause 5.2.2.1). For a RedCap UE, CQI table 2 is only supported if the UE indicates support of 256QAM for PDSCH. |

| ***csi-IM-ResourcesForlnterference*** |
|---|
| CSI IM resources for interference measurement. *csi-ResourceConfigld* of a *CSI-ResourceConfig* included in the configuration of the serving cell indicated with the field "carrier" above. The *CSI-ResourceConfig* indicated here contains only CSI-IM resources. The *bwp-Id* in that *CSI-ResourceConfig* is the same value as the *bwp-Id* in the CSI-*ResourceConfig* indicated by *resourcesForChannelMeasurement.* |

| ***csi-ReportingBand*** |
|---|
| Indicates a contiguous or non-contiguous subset of subbands in the bandwidth part which CSI shall be reported for. Each bit in the bit-string represents one subband. The right-most bit in the bit string represents the lowest subband in the BWP. The choice determines the number of subbands (subbands3 for 3 subbands, subbands4 for 4 subbands, and so on) (see TS 38.214 [19], clause 5.2.1.4). This field is absent if there are less than 24 PRBs (no sub band) and present otherwise (see TS 38.214 [19], clause 5.2.1.4). |

| ***csi-ReportMode*** |
|---|
| Configures the CSI report modes Model or Mode 2 (see TS 38.214 [19], clause 5.2.1.4.2) |

| ***dummy*** |
|---|
| This field is not used in the specification. If received it shall be ignored by the UE. |

| ***groupBasedBeamReporting*** |
|---|
| Turning on/off group beam based reporting (see TS 38.214 [19], clause 5.2.1.4). If *groupBasedBeamReporting* (without suffix) is set to disabled, *groupBasedBeamReporting-v1710* is absent. |

| ***non-PMI-PortIndication*** |
|---|
| Port indication for RI/CQI calculation. For each CSI-RS resource in the linked ResourceConfig for channel measurement, a port indication for each rank R, indicating which R ports to use. Applicable only for non-PMI feedback (see TS 38.214 [19], clause 5.2.1.4.2). |
| The first entry in *non-PMI-Portlndication* corresponds to the NZP-CSI-RS-Resource indicated by the first entry in *nzp-CSI-RS-Resources* in the *NZP-CSI-RS-ResourceSet* indicated in the first entry of *nzp-CSI-RS-ResourceSetList* of the *CSI-ResourceConfig* whose *CSI-ResourceConfigld* is indicated in a CSI-Measld together with the above CSI-*ReportConfigId*; the second entry in *non-PMI-Portlndication* corresponds to the NZP-CSI-RS-Resource indicated by the second entry in *nzp-CSI-RS-Resources* in the *NZP-CSI-RS-ResourceSet* indicated in the first entry of *nzp-CSI-RS-ResourceSetList* of the same *CSI-ResourceConfig,* and so on until the NZP-CSI-RS-Resource indicated by the last entry in *nzp-CSI-RS-Resources* in the in the *NZP-CSI-RS-ResourceSet* indicated in the first entry of *nzp-CSI-RS-ResourceSetList* of the same *CSI-ResourceConfig.* Then the next entry corresponds to the NZP-CSI-RS- |
| Resource indicated by the first entry in *nzp-CSI-RS-Resources* in the *NZP-CSI-RS-ResourceSet* indicated in the second entry of *nzp-CSI-RS-ResourceSetList* of the same *CSI-ResourceConfig* and so on. |

| ***nrofReportedGroups*** |
|---|
| Number of reported resource groups per CSI-report. Value n1 means one resource group, *n2* means 2 resource groups, and so on. If *nrofReportedGroups* is configured, the UE ignores groupBasedBeamReporting (without suffix). |

| ***nrofReportedRS*** |
|---|
| The number (N) of measured RS resources to be reported per report setting in a non-group-based report. N <= N_max, where N_max is either 2 or 4 depending on UE capability. (see TS 38.214 [19], clause 5.2.1.4) When the field is absent the UE applies the value 1. |

| ***numberOfSingleTRP-CSI-Mode1*** |
|---|
| Configures the number of reported X CSls when *csi-ReportMode* is set to 'Mode 1' as described in TS 38.214 [19], clause 5.2.1.4.2. The field is present only if csi-ReportMode configures Mode 1. |

| ***nzp-CSI-RS-ResourcesForlnterference*** |
|---|
| NZP CSI RS resources for interference measurement. *csi-ResourceConfigld* of a *CSI-ResourceConfig* included in the configuration of the serving cell indicated with the field "carrier" above. The *CSI-ResourceConfig* indicated here contains only NZP-CSI-RS resources. The *bwp-Id* in that *CSI-ResourceConfig* is the same value as the *bwp-Id* in the *CSI-ResourceConfig* indicated by *resourcesForChannelMeasurement.* |

| ***pOalpha*** |
|---|
| Index of the p0-alpha set determining the power control for this CSI report transmission (see TS 38.214 [19], clause 6.2.1.2). |

| ***pdsch-BundleSizeForCSI*** |
|---|
| PRB bundling size to assume for CQI calculation when *reportQuantity* is CRI/RI/i1/CQI. If the field is absent, the UE assumes that no PRB bundling is applied (see TS 38.214 [19], clause 5.2.1.4.2). |

| ***pmi-Formatlndicator*** |
|---|
| Indicates whether the UE shall report a single (wideband) or multiple (subband) PMI. (see TS 38.214 [19], clause 5.2.1.4). |

| ***pucch-CSI-ResourceList*** |
|---|
| Indicates which PUCCH resource to use for reporting on PUCCH. |

| ***reportConfigType*** |
|---|
| Time domain behavior of reporting configuration. |

| ***reportFreqConfiguration*** |
|---|
| Reporting configuration in the frequency domain. (see TS 38.214 [19], clause 5.2.1.4). |

| ***reportQuantity*** |
|---|
| The CSI related quantities to report. see TS 38.214 [19], clause 5.2.1. If the field *reportQuantity-r16* is present, UE shall ignore *reportQuantity* (without suffix). |

| ***reportSlotConfig*** |
|---|
| Periodicity and slot offset (see TS 38.214 [19], clause 5.2.1.4). If the field *reportSlotConfig-v1530* is present, the UE shall ignore the value provided in *reportSlotConfig* (without suffix). |

| ***reportSlotOffsetList,** reportSlotOffsetListDCI-0-1, reportSlotOffsetListDCI-O-2* |
|---|
| Timing offset Y for semi persistent reporting using PUSCH. This field lists the allowed offset values. This list must have the same number of entries as the *pusch-TimeDomainAllocationList* in *PUSCH-Config.* A particular value is indicated in DCI. The network indicates in the DCI field of the UL grant, which of the configured report slot offsets the UE shall apply. The DCI value 0 corresponds to the first report slot offset in this list, the DCI value 1 corresponds |
| to the second report slot offset in this list, and so on. The first report is transmitted in slot n+Y, second report in n+Y+P, where P is the configured periodicity. |
| Timing offset Y for aperiodic reporting using PUSCH. This field lists the allowed offset values. This list must have the same number of entries as the *pusch-TimeDomainAllocationList* in *PUSCH-Config.* A particular value is indicated in DCI. The network indicates in the DCI field of the UL grant, which of the configured report slot offsets the UE shall apply. The DCI value 0 corresponds to the first report slot offset in this list, the DCI value 1 corresponds to the second report slot offset in this list, and so on (see TS 38.214 [19], clause 6.1.2.1). |
| The field *reportSlotOffsetListDCI-0-1* applies to DCI format 0_1 and the field *reportSlotOffsetListDCI-0-2* applies to DCI format 0_2 (see TS 38.214 [19], clause 6.1.2.1). |
| The fields *reportSlotOffsetList-r17, reportSlotOffsetListDCI-0-1-r17* and *reportSlotOffsetListDCI-0-2-r17* are only applicable for SCS 480 kHz and 960 kHz and if they are configured, the UE shall ignore the fields *reportSlotOffsetList* (without suffix), *reportSlotOffsetListDC1-0-1* (without suffix) and *reportSlotOffsetListDCI-0-2* (without suffix) for SCS 480 kHz and 960 kHz. |

| ***resourcesForChannelMeasurement*** |
|---|
| Resources for channel measurement. *csi-ResourceConfigld* of a *CSI-ResourceConfig* included in the configuration of the serving cell indicated with the field "carrier" above. The *CSI-ResourceConfig* indicated here contains only NZP-CSI-RS resources and/or SSB resources. This *CSI-ReportConfig* is associated with the DL BWP indicated by *bwp-Id* in that *CSI-ResourceConfig.* |

| ***sharedCMR*** |
|---|
| Enables sharing of channel measurement resources between different CSI measurement hypotheses when (1) *csi-ReportMode* is set to 'Mode1' and *numberOfSingleTRP-CSI-Mode1* is set to 1 or 2; or (2) *csi-ReportMode* is set to 'Mode2' (see TS 38.214 [19], clause 5.2.1.4.2). |

| ***subbandSize*** |
|---|
| Indicates one out of two possible BWP-dependent values for the subband size as indicated in TS 38.214 [19], table 5.2.1.4-2 . If *csi-ReportingBand* is absent, the UE shall ignore this field. |

| ***timeRestrictionForChannelMeasurements*** |
|---|
| Time domain measurement restriction for the channel (signal) measurements (see TS 38.214 [19], clause 5.2.1.1). |

| ***timeRestrictionForlnterferenceMeasurements*** |
|---|
| Time domain measurement restriction for interference measurements (see TS 38.214 [19], clause 5.2.1.1). |

| ***PortlndexForBRanks* field descriptions** |
|---|
| ***portIndex8*** |
| Port-Index configuration for up to rank 8. If present, the network configures port indexes for at least one of the ranks. |

| ***port*/*ndex4*** |
|---|
| Port-Index configuration for up to rank 4. If present, the network configures port indexes for at least one of the ranks. |

| ***port*/*ndex2*** |
|---|
| Port-Index configuration for up to rank 2. If present, the network configures port indexes for at least one of the ranks. |

| ***portlndex1*** |
|---|
| Port-Index configuration for rank 1. |

| *PUCCH-CSI-Resource* **field descriptions** |
|---|
| ***pucch-Resource*** |
| PUCCH resource for the associated uplink BWP. Only PUCCH-Resource of format 2, 3 and 4 is supported. The actual PUCCH-Resource is configured in *PUCCH-Config* and referred to by its ID. When two *PUCCH-Config* are configured within *PUCCH-ConfigurationList, PUCCH-Resourceld* in a *PUCCH-CSI-Resource* refers to a PUCCH-Resource in the *PUCCH-Config* used for HARQ-ACK with low priority. |

As apparent from the above *CSI-ReportConfig,* the parameters *reportquantity, reportQuantity-r16, and reportQuantity-r17* can be used define the report quantities that the UE shall report.

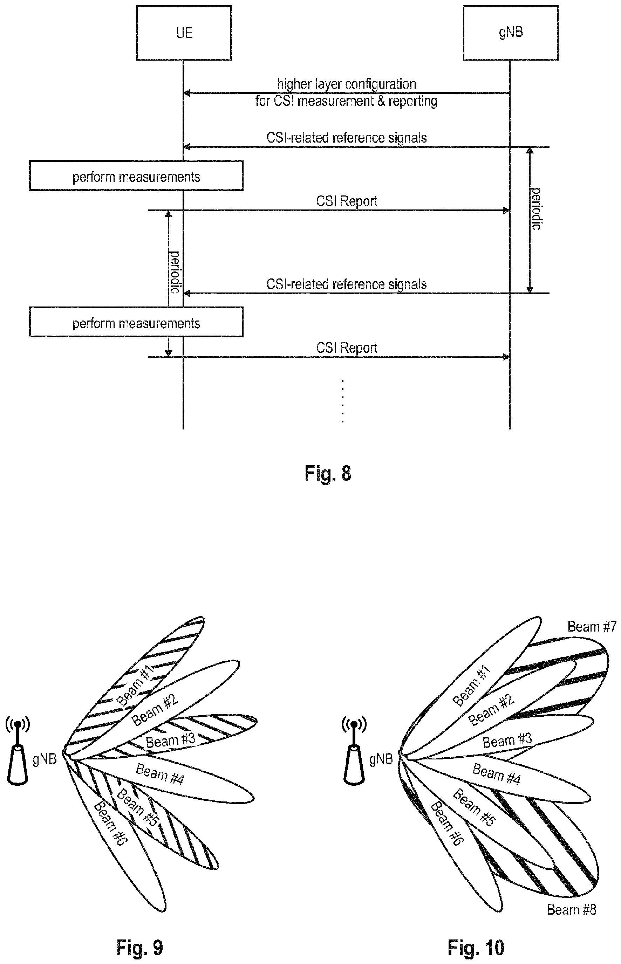

**Fig. 8** illustrates an exemplary and simplified signaling exchange for a measurement reporting, assuming a periodic transmission of the reference signals and the report. As apparent therefrom, the gNB configures the UE for the measurement and reporting (e.g. as described above). The UE follows this configuration for the measurement and reporting processing. The gNB transmits the reference signals, and the UE performs the configured measurements on the received reference signals and generates the CSI report, which is then transmitted to the gNB. This can be repeatedly performed, e.g. periodically as configured.

### Artificial intelligence/machine learning for beam management

In practical scenarios, beam-management is faced with various sources of nonlinearities. For ease of handling, conventional mathematical methods usually simplify the real-world scenarios by ignoring these nonlinear factors. By contrast, artificial intelligence/machine learning, AI/ML, is capable of accurately modelling these complex nonlinear relationships and may facilitate efficient beam management.

In an ongoing 3GPP Rel-18 study item *"study on AI*/*ML for NR air interface",* artificial intelligence/machine learning algorithms are discussed that are usable for predicting the best beam(s) or other quantities/characteristics such as RSRP from a first set of beams (e.g. Set A) based on the measurements of a second set of beams (e.g. Set B). Details can be found, for example, in *"Discussion on sub use* cases *of beam management',* 3GPP TSG-RAN WG1 #109-e Meeting, May 9-20, 2022, R1-2204078, and *"Discussion on sub use* cases *of beam management',* 3GPP TSG-RAN WG1 #110 Meeting, May 9-20, 2022, R1-2207506.

In a first beam management use case (BM-Case 1), spatial domain DL beam prediction is performed for a Set A of beams (first set of beams) based on measurement results of a Set B (a second set of beams). In one example, Set B may be a subset of set A, and thus have one or more beams in common. Alternatively, Set A and Set B may not have a beam in common with each other.

In a second beam management use case (BM-Case 2), a temporal DL beam prediction may be performed for Set A (a first set of beams) of beams based on previous measurements results for Set B (a second set of beams). In this case, Set B may be a subset of SetA, or different from Set A, in the sense that Set A and Set B do not exhibit a common beam. On the other hand, Set A and Set B may be equal, i.e. they may include the same beams.

For example, to avoid repeatedly performing an exhaustive search and to reduce the communication overhead, machine learning may be applied to a beam selection procedure. The beam selection procedure may include a classification task, where the target output is the best beam pair index. A trained AI/ML model may recommend a set of beam pairs. Instead of an exhaustive search over all the beam pairs, beam sweeping overhead may be reduced by searching only among the recommended beam pairs.

One such scenario is in an initial beam establishment procedure, instead of measuring all SSB beams, the UE may measure a subset of SSB beams only. Then, the AI/ML model at the UE may determine the best SSB beam based on the partial beam set measurements, wherein the determined best SSB beam can be reported to the base station.

Further, in a beam adjustment procedure, by using AI/ML, a set of SSB beams may be considered as Set B for the measurement, and a set of CSI-RS beams may be considered as Set A for prediction. Based on the measurement results for the set B beams, an AI/ML module at the UE (and/or at gNB) may predict parameters related the set A beams. The UE may thus predict optimally a refined CSI-RS beam for the given UE. This may significantly reduce UE measurement effort compared with measuring a large set of CSI-RS beams in order to find the strongest refined beam. At the same time, the RS overhead can be optimized.

Still further, when predicting beam failure in advance by using AI/ML, the failure event may be avoided by proactively switching to another beam.

Latency, e.g. for switching to another beam, can be reduced. The beam selection accuracy can be improved too.

Different input for the AI/ML model is possible, such as one or a combination of:
- the L1-RSRP measurements based on Set B and potentially the corresponding DL Tx and/or Rx beam ID,
- assistance information, e.g. TX and/or Rx beam shape information (e.g. beam pattern, boresight direction, 3dB beamwidth etc.)
- expected TX and/or Rx beam for prediction (e.g. expect Tx and/or Rx angle, Tx and/or Rx beam ID for the prediction),
- UE position information,
- UE direction information
- Tx beam usage information
- UE orientation information
- CIR based on Set B

Different output from the AI/ML model is possible, such as one or a combination of:
- Tx and/or Rx beam ID
- Predicted L1-RSRP of the N predicted DL Tx and/or Rx beams (e.g. of top-N predicted beams)
- Probability of the beam to be the best beam,
- associated confidence,
- beam application time/dwelling time,
- predicted beam failure,
- Tx and/or Rx beam angles.

**Fig. 9** illustrates an example of a spatial relationship between multiple beams, wherein a second set of beams (Set B) is a subset of a first set of beams (Set A). Specifically, the plurality of beams includes 6 beams (beam#1 to beam#6), which extend in a plurality of different directions, and which are not quasi co-located (QCLed). In the figure, Set A includes beam#1 to beam#6, whereas Set B includes beams # 1, #3 and #5. That is, Set A = {#1, #2, #3, #4, #5, #6} and Set B = {#1, #3, #5}. Hence, in the illustrated example, Set B is a subset of Set A, and a UE may perform, based on measurement results for the beams of Set B, a beam management procedure. For example, the UE may determine, using an AI/ML module, a first characteristic of a beam included in Set A using measurement results of a second characteristic of the beams included in Set B. The first and second characteristics may be equal or different from one another. For example, said characteristics may relate to a signal strength, a signal to noise ratio, etc. In another example, the AI/ML module may determine a best beam from among the beams included in SetA.

**Fig. 10** illustrates another example of a spatial relationship between multiple beams, wherein a first set of beams (Set A) is different from a second set of beams (Set B). Specifically, Set A includes beam#1 to beam#6, whereas Set B includes beams #7 and #8. That is, Set A = {#1, #2, #3, #4, #5, #6} and Set B = {#7, #8}. Sets A and Set B do not share a common beam. In the illustrated example, beams #7 and #8 exhibit a wider beam profile, each overlapping a plurality of beams included in Set A. That is, beam #7 is quasi co-located to beams #1 to #3, and beam #8 is quasi co-located to beams #4 to #6. Using an AI/ML module with measurement results regarding beams #7 and #8, the UE may determine characteristics of beams #1 to #6, for example. Alternatively or additionally, the AI/ML module may determine a best beam from among the beams of Set A.

When using an AI/ML module for beam management procedures, it is desirable to provide the AI/ML module with information as input, which allows the AI/ML module to provide accurate and reliable prediction results.

### Further Improvements

In the above, the use of AI/ML models has been discussed in different processes, including initial beam establishment, beam adjustment, and beam failure prediction. The use of AI/ML models may thus involve that the results of the beam predictions are reported to the network, e.g. to the gNB, e.g. such that the network can properly perform a follow-up action based on said predicted information.

The inventors have however identified the problem that existing reporting procedures for beams only allow the UE to report information on beams that is actually measured. As presented above, the beam reporting is based on the CSI reporting procedure and can be configured e.g. based on the IE *CSI-ReportConfig.*

For instance, the reporting quantities defined for the CSI reporting (see IE *CSI-ReportConfig* and the parameter *reportQuantity,* TS 38.331) are currently defined only for measurements. For example, the L1-RSRP measurements for reporting are defined in section 9.5 of 3GPP TS 38.133 v17.7.0:
*"When configured by the network, the UE shall be able to perform L1-RSRP measurements of configured CSI-RS, SSB or CSI-RS and SSB resources for L 1-RSRP. The measurements shall be performed for* a *serving cell, including PCell, PSCell, or SCell, on the resources configured for L 1-RSRP measurements within the active BWP.*
*The UE shall be able to measure all CSI-RS resources and*/*or SSB resources of the nzp-CSI-RS-ResourceSet and*/*or csi-SSB-ResourceSet within the CSI-ResourceConfig settings configured for L 1-RSRP for the active BWP, provided that the number of resources, including the number* of *SSB resources of the cell with PCI different from serving cell configured for L 1-RSRP measurements in 9.13, does not exceed the UE capability indicated by beamManagementSSB-CSI-RS.*
*The UE shall report the measurement quantity (reportQuantity) and send periodic, semi-persistent or aperiodic reports, according to the reportConfigType according to the CSI reporting configuration(s) (CSI-ReportConfig) for the active BWP."*

Furthermore, in sections 10.1.19.2 and 10.1.20.2 of 38.133, L1-RSRP measurement accuracy is defined.

As apparent therefrom, at least some of the currently defined report quantities are not usable or suitable for reporting the prediction results, because they are specifically defined for measurements. Furthermore, the gNB, as the recipient of the measurement/prediction results, expects the reported quantities to have been measured.

Moreover, it might be beneficial for the gNB to be aware whether the reported quantities were determined by the UE based on measurements or based on prediction. Such a distinction appears not easily possible according to the current definitions of the 3GPP.

The inventors thus identified the possibility to define an improved prediction result reporting procedure for facilitating to avoid one or more of the above described disadvantages. The present invention relates to different solutions and variants for such an improved prediction result reporting procedure.

### Embodiments

In the following, UEs, base stations, and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system.

Communication between the UE and the base station is typically standardized and may be defined by different layers, such as PHY, MAC, RRC etc. (see above background discussion).

The terms **"prediction"** and **"predicting"** (and similar terms) used herein are intended to describe a process that is different from the process of **"measuring".** In one example, the process of "predicting" is performed based on a suitable model based on Artificial Intelligence / Machine Learning, such as the one discussed in 3GPP (see above discussion).

In one example, the expression **"characteristic of a beam"** (and similar expressions) used herein is intended to refer to parameters related to a beam, some of which may then be reported. In one example, the characteristics of a beam may correspond to the "report quantities" already known in 3GPP 5G NR. The characteristics may be measured or predicted.

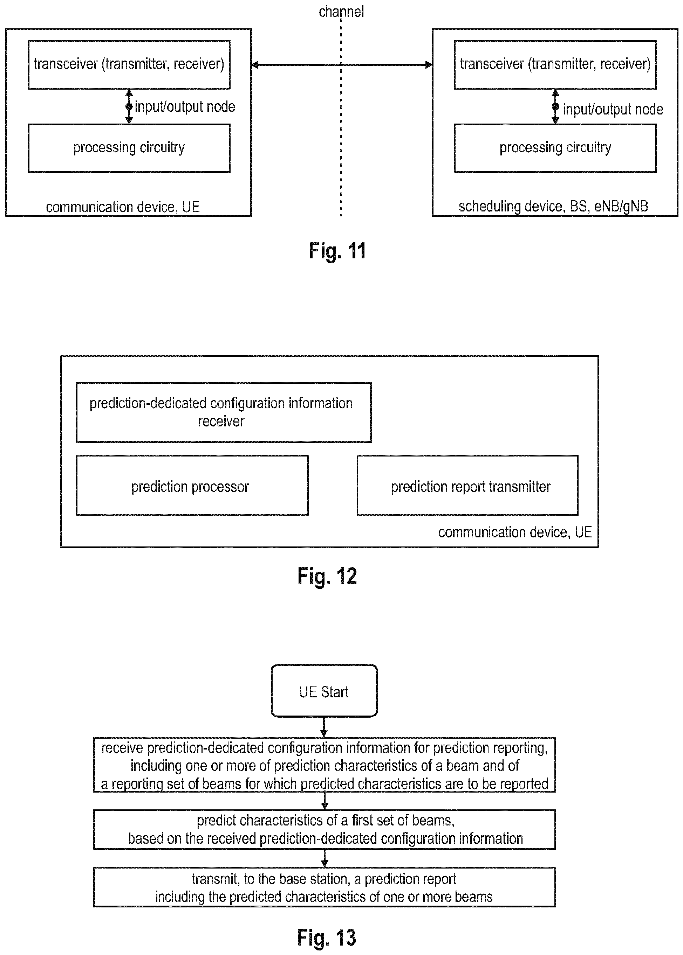

**Fig. 11** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of improved prediction result reporting procedures will be described in the following. In said connection, improved UEs, improved base stations and improved integrated circuits are presented, which participate separately or together in the improved prediction result reporting procedures. Corresponding methods for the UE behavior and the base station behavior are provided as well. The integrated circuits may correspond to the UE and base station, and respectively their behavior.

The present solutions of the improved prediction result reporting procedures can be based on some or a combination of the different mechanisms described above in context of the exemplary 3GPP 5G-NR implementations, including e.g. the use of the signaling mechanisms (e.g. particular the information elements for the beam measurement configuration and reporting) or the use of a prediction model (AI/ML model) as currently discussed in 3GPP.

**Fig. 12** illustrates a simplified and exemplary UE structure according to an exemplary implementation of the improved prediction results reporting procedure, which can be implemented based on the general UE structure explained in connection with Fig. 11. The various structural elements of the UE illustrated in said Fig. 12 can be interconnected between one another e.g., with corresponding input/output nodes (not shown) e.g., in order to exchange control and user data and other signals. Although not shown for illustration purposes, the UE may include further structural elements.

As apparent from Fig. 12, the UE may include a prediction-dedicated configuration information receiver, a prediction processor, and a prediction report transmitter.

In the present case, the receiver of the UE can thus be exemplarily configured to at least partly perform one or more of receiving prediction-dedicated configuration information, measurement-related configuration information etc.

In the present case as will become apparent from the below disclosure, the processing circuitry of the UE can thus be exemplarily configured to at least partly perform one or more of predicting characteristics of beams, and determining which one of a measurement report and prediction report is to be transmitted, etc.

In the present case as will become apparent from the below disclosure, the transmitter of the UE can thus be exemplarily configured to at least partly perform one or more of transmitting the prediction report and transmitting the measurement report, etc.

One exemplary procedure as will be disclosed in more detail further below is implemented by a UE that includes the following. A receiver of the UE receives, from a base station, configuration information dedicated for prediction reporting and not for measurement reporting. The received prediction-dedicated configuration information configures one or more of:
- prediction characteristics of a beam that are to be reported from the UE to the base station, and
- a reporting set of beams identifying beams for which predicted characteristics are to be reported from the UE to the base station.

A processor of the UE predicts characteristics of a first set of beams, based on the received prediction-dedicated configuration information. A transmitter of the UE transmits, to the base station, a prediction report including the predicted characteristics of one or more beams.

According to one optional and exemplary implementation of the above UE, the prediction-dedicated configuration information allows the UE to predict and report characteristics of a beam in compliance with the configuration and allows the gNB, receiving such a prediction report, to properly interpret the received report.

A corresponding exemplary method comprises the following steps performed by a UE:
receiving, from a base station, configuration information dedicated for prediction reporting and not for measurement reporting, wherein the received prediction-dedicated configuration information configures one or more of:
   - prediction characteristics of a beam that are to be reported from the UE to the base station, and
   - a reporting set of beams identifying beams for which predicted characteristics are to be reported from the UE to the base station,
predicting characteristics of a first set of beams, based on the received prediction-dedicated configuration information, and
transmitting, to the base station, a prediction report including the predicted characteristics of one or more beams.

A corresponding sequence diagram for an exemplary UE behaviour in line with the above-discussed UE and UE method is illustrated in **Fig. 13****.**

The above-described prediction-result reporting procedure thus achieves the object and overcomes some of the drawbacks explained above.

For instance, the newly-introduced prediction-dedicated configuration information, transmitted from the base station to the UE, facilitates introducing a procedure to report prediction results for one or more beams, instead of or in addition to the reporting of measurement results for beams.

The prediction-dedicated configuration is dedicated to (e.g. used only for) reporting of prediction results, and particularly not used for performing and reporting measurements, such that it is possible to specifically configure how the prediction and prediction reporting is to be performed.

Moreover, by indicating, in the prediction-dedicated configuration information, the prediction characteristics (dedicated for only the prediction), it is possible that the reported prediction characteristics can be easily identified by the recipient (here the base station) to be the result of a prediction process at the reporting entity (here the UE) rather than the result of measurements.

Similarly, by indicating, in the prediction-dedicated configuration information, a reporting set of beams, it is possible that the recipient (here the base station) can easily identify the results reported for one of the beams of the configured reporting set of beams to have been obtained by a prediction process at the reporting entity (here the UE) rather than to have been obtained by measurements.

Since the improved prediction result reporting procedure facilitates implementing the use of predictions instead of measurements, it is possible to obtain the benefits corresponding to the use of predictions, such as reducing the measurement effort, reducing the latency (e.g. when switching to another beam), while at the same time improving the beam selection accuracy, etc.

Some exemplary implementations of the improved prediction result reporting procedure also involve improved base stations. Correspondingly, the improved prediction result reporting procedure also provides improved base stations that participate therein, as will be explained in the following.

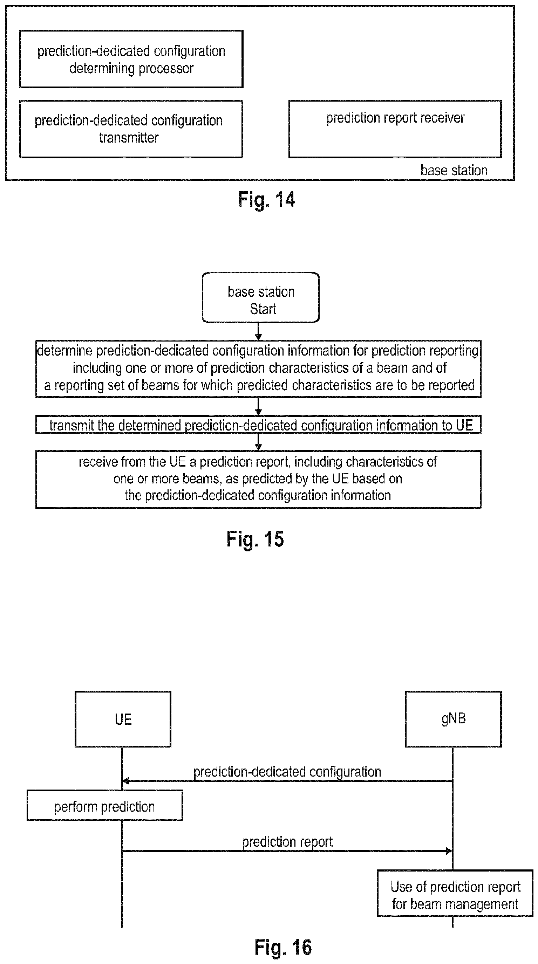

**Fig. 14** illustrates a simplified and exemplary base station structure according to an exemplary implementation of the improved prediction result reporting procedure, which can be implemented based on the general base station structure explained in connection with Fig. 11. The various structural elements of the base station illustrated in said Fig. 14 can be interconnected between one another e.g., with corresponding input/output nodes (not shown) e.g., in order to exchange control and user data and other signals. Although not shown for illustration purposes, the base station may include further structural elements.

As apparent therefrom, the base station comprises a prediction-dedicated configuration determining circuitry, a prediction-dedicated configuration transmitter, and a prediction report receiver.

In the present case as will become apparent from the below disclosure, the receiver of the base station can thus be exemplarily configured to at least partly perform one or more of receiving the prediction report and receiving a measurement report, from a UE, etc.

In the present case as will become apparent from the below disclosure, the processing circuitry of the base station can thus be exemplarily configured to at least partly perform one or more of determining a prediction-dedicated configuration and determining a measurement-related configuration, etc.

In the present case as will become apparent from the below disclosure, the transmitter of the base station can thus be exemplarily configured to at least partly perform one or more of transmitting a prediction-dedicated configuration and a measurement-related configuration to the UE, etc.

One exemplary procedure as will be disclosed in more detail further below is implemented by a base station that includes the following. A processor of the base station determines configuration information dedicated for prediction reporting and not for measurement reporting. The prediction-dedicated configuration information configures one or more of:
- prediction characteristics of a beam that are to be reported from the UE to the base station, and
- a reporting set of beams identifying beams for which predicted characteristics are to be reported from the UE to the base station.

A transmitter of the base station transmits the prediction-dedicated configuration information to the UE. A receiver of the base station receives from the UE a prediction report including characteristics of one or more beams, predicted by the UE based on the prediction-dedicated configuration information.

One exemplary possibility is that the base station can use the prediction results from the prediction report for beam or cell management. For example, the base station may decide to switch the UE's downlink serving beam(s) to the beam(s) reported by the UE while keeping the current serving cell. As another example, the base station may decide to change the current serving cell(s) of UE to another cell(s). On the other hand, the base station may alternatively decide not to switch UE's serving beam(s) or serving cell(s) as long as the current ones are good enough. As a further example, after receiving the prediction report, the base station may request UE to do further measurements and then report the measurement results. This could happen, for example, when the prediction result is associated with low confidence level, or the base station has certain reason to doubt the prediction results reported by the UE.

A corresponding method comprises the following steps performed by the base station:
determining configuration information dedicated for prediction reporting and not for measurement reporting, wherein the prediction-dedicated configuration information configures one or more of :
   - prediction characteristics of a beam that are to be reported from the UE to the base station, and
   - a reporting set of beams identifying beams for which predicted characteristics are to be reported from the UE to the base station,
transmitting the prediction-dedicated configuration information to the UE, and
receiving from the UE a prediction report including characteristics of one or more beams, predicted by the UE based on the prediction-dedicated configuration information.

A corresponding sequence diagram for an exemplary base station behavior in line with the above-discussed base station and corresponding method is illustrated in **Fig. 15****.** The sequence diagram illustrates an exemplary and simplified implementation of the above presented base station method.

According to one exemplary possibility, the base station can use the prediction results from the prediction report for beam or cell management.

**Fig. 16** is a signaling diagram of an exemplary and simplified implementation of the improved prediction result reporting procedure, illustrating the exchange of messages between the different participating entities (here the UE and gNB) and the steps performed at these entities.

The UE behaviour and gNB behaviour follow the above described UE and base station and the respective methods. Furthermore, Fig. 16 illustrates how the gNB can use the received prediction report, e.g. for the beam management. In further examples, the above prediction-dedicated configuration information can include further configuration parameters that are necessary or useful for the UE to be able to perform the prediction and to report the prediction results to the base station. Depending on the actual scenario (e.g. the AI/ML model, or the characteristics that are to be predicted and reported), such further parameters could be e.g. information on the radio resources on which reference signals are transmitted for a beam (otherwise used for performing measurements thereon). The information on the beams for which the prediction reporting is to be performed can be separately defined by the above mentioned configuration information on the reporting set of beams. As another example, the prediction-dedicated configuration information could also include further information relating to how and when the prediction results are to be reported.

According to one example of the above improved prediction results reporting procedure, the UE can also be configured with measurement-related configuration information, for configuring parameters in relation to performing measurements and reporting results of these measurements. The measurement-related configuration information configures e.g.
- measurement characteristics of a beam that are to be reported from the UE to the base station (such as the quantities defined in the parameter *reportquantity* of the CSI-*ReportConfig* IE of TS 38.331, see above), and
- for each beam of a second set of beams, radio resources for measuring the measurement characteristics (such as the radio resource sets of the CSI-*ResourceConfig* of the *CSI-ReportConfig* IE of TS 38.331 see above),
- parameters defining how and when the results of the measurements are to be reported, e.g. reporting timing (e.g. periodic, semi-persistent, aperiodic), and uplink channel to use.

In accordance with the received measurement-related configuration information, the UE can perform the measurements on the radio resources of beams so as to determine the configured measurement characteristics. Then, the UE transmits a suitable measurement report, including the measured measurement characteristics of beams, to the base station, also following what the measurement configuration configured for the reporting.

In such an example, the measurement-related configuration information is separate from the prediction-dedicated configuration information, thereby allowing a separate configuration for prediction and measurement.

Accordingly, the UE can be configured to perform and report the results of measurements and / or predictions, following the corresponding configuration information.

In one example, the UE may follow the prediction configuration instead of the measurement configuration. For instance, when a UE is configured for reporting prediction characteristics of a beam, the UE, instead of performing measurements and reporting the measurement characteristics for said beam, predicts the configured prediction characteristics and then reports them to the base station. This can be done e.g. for every beam among the beams that the UE is configured for measurement reporting.

As another example, when a UE is configured with a reporting set of beams (but is not configured with prediction characteristics), the UE, instead of performing measurements for said beams among the reporting set of beams, predicts the measurement characteristics for said reporting set of beams and reports the predicted measurement characteristics to the base station. On the other hand, for beams for which the UE is configured to report measurements but which are not among the configured reporting set of beams, the UE may still perform the measurement of the configured measurement characteristics and report the measured measurement characteristics of those beams to the base station.

According to further examples of such an improved prediction result reporting procedure, the prediction-dedicated configuration information may only configure a part of what is needed for the UE to perform the prediction and to report the prediction results to the base station. In more detail, the prediction of characteristics of one beam might require a certain input, however not defined by the prediction-dedicated configuration information itself. Exemplary, what may be further required is information on the characteristics of a beam that are to be predicted and reported (in case the prediction-dedicated configuration information does not configure the specific prediction characteristics). As a further example, it might also be necessary to input information on the radio resources on which the reference signals are transmitted for a beam (otherwise used for performing measurements thereon); information on said radio resources might also provide information for which beams the prediction of characteristics is to be performed (but not included in the prediction-dedicated configuration information).

Similarly, after having obtained the output of the prediction (e.g. the predicted characteristic of a beam), the reporting of such prediction results may require certain parameters that are not necessarily included in the prediction-dedicated configuration information, such as how and when to report the prediction results to the base station. Exemplary, what may be further required is the reporting timing (e.g. periodic, semi-persistent, aperiodic), and uplink channel to use.

In such cases, the improved prediction results reporting procedure could be performed such that the remaining part of what is needed for the prediction and prediction result reporting is obtained from the measurement-related configuration. As presented above, a UE is typically already configured to perform measurements and reporting of the measurement results. The improved prediction result reporting procedure is separate and in addition thereto and may reuse certain parameters from the measurement-related configuration. For instance, the defined measurement characteristics of a beam can be re-used, such that such measurement characteristics of a beam are predicted rather than measured. This might be the case, where the prediction-dedicated configuration does not define the prediction characteristics.

Further, the radio resources of one or more beams as intended for performing the measurements could equally be re-used for the prediction processes at the UE. As another example, the definition of how and when the measurements are to be reported can be equally applied to how and when to report the prediction results.

Such a re-use of measurement-related configuration parameters allows to obtain synergetic effects and reduces the signalling overhead required for the configuration of the prediction and prediction reporting. Further, the configuration of the prediction result reporting still remains flexible, because it allows that the gNB defines parameters dedicated for only the prediction as needed, while resorting to other parameters already defined for the measurement reporting when it is not necessary to specifically define parameters for only the prediction.

Different and exemplary solutions are explained in said respect. For the explanation of the different solutions, some exemplary and simplifying assumption are made. The solutions described therein involve the prediction of e.g. characteristics of beams. However, the focus of the solution is not the prediction itself, and thus only provides basic information on how the prediction process can be implemented. In one example, the prediction can be implemented based on a suitable AI/ML model, such as the one mentioned above with respect to 3GPP. In this connection, it is assumed that such an AI/ML model has been defined in advance, e.g. by a suitable training. Further, the AI/ML model is assumed to have access to the necessary input parameters allowing the prediction of the required output. The prediction process of predicting characteristics of a first set of beams might also involve using results of measurements that are performed on a second set of beams, wherein the first set can be a subset of the second set (e.g. all the beams of the first set are also part of the second set) but need not have one or more beams in common. Consequently, in the explanations, it will exemplarily assumed that the UE uses a prediction model for outputting e.g. predictions on characteristics of beams. The first set of beams, i.e. for which beams prediction will be performed, can be defined by the UE or the gNB.

Further to the above explained aspects of the improved prediction result reporting procedure, one UE can be configured with several prediction-dedicated configurations, which may e.g. differ between one another regarding the prediction characteristics and/or the reporting set of beams and/or the reporting timing. In addition, the UE can be configured with several measurement-related configurations. It is equally possible to define a mixed configuration, wherein one part of the configuration relates to prediction-dedicated parameters while another part of said configuration relates to measurement-related parameters; in such a case, it is simple to re-use measurement-related parameters of said configuration for the prediction reporting, when the corresponding parameters are not defined by the prediction-dedicated part.

Further to the above, in an example 3GPP-related implementation, the UE could be configured with several *CSI-ReportConfig* information elements (see above definition in 3GPP), respectively being directed to either only measurement, only prediction or to both measurement and prediction.

In the above explained implementations of the improved prediction result reporting procedure, it was described how the UE can have a mixed configuration for prediction and measurement. This is an example scenario where the reporting of measurement results and prediction results could occur at the same time and where the resulting report could include both measurement results and prediction results for the same beams. Particularly, this would occur when the prediction configuration re-uses measurement-related parameters regarding how and when to report the measurement results.

Moreover, further implementations of the improved prediction result reporting procedures, which can be combined with any of the other described implementations, provide possibilities on how the improved prediction result reporting procedure can take this into account.

One possibility involves that the base station can dynamically determine which results it wants to receive, i.e. the prediction results or the measurement results or both. Correspondingly, the base station dynamically determines and transmits in a timely manner a suitable indication to the UE, as to which one of the prediction report and the measurement report is to be transmitted to the base station. In one example, for a scenario in which the prediction and measurement results are transmitted aperiodically following a corresponding trigger from the base station, this dynamic indication can be transmitted together with the aperiodic trigger. For instance, the UE would only transmit the dynamically-indicated report, be it the prediction report or the measurement report or both.

Another possibility is that any one or both of a prediction report and a measurement report includes a suitable indication to identify the report as a prediction report or measurement report. The UE can thus transmit either only one or both of the prediction report and the measurement report. The UE in this case can decide which one or both reports are to be transmitted to the base station.

Still another possibility is that the UE transmits both the prediction report and the measurement report, however, following a predefined order of transmission, e.g. the measurement report before the prediction report, or vice versa. Correspondingly, the base station can distinguish the type of report from the order of reception. As a further variant thereof, the order can relate to the beam characteristic respectively, such that for a given characteristic (e.g. a RSRP), the predicted value is reported first, following by the measured value (or the other way round).

According to still another possibility, the UE might follow a prioritization rule so as to determine which one of a prediction report and measurement report is to be transmitted. For instance, the prioritization rule might define that a measurement report has a higher priority than a prediction report, or vice versa. Following such a prioritization rule, the UE might transmit the higher-priority report (e.g. the measurement report) and might drop the lower-priority report (e.g. the prediction report).

In the above explained implementations of the improved prediction results reporting procedure, it was described how the UE can report the prediction results to the base station, e.g. following a reporting timing as for the measurement reporting (e.g. aperiodic, periodic or semi-persistently). In a 3GPP-related implementation, the reporting timing of the measurement / prediction report could be defined by the parameter reportConfigType:

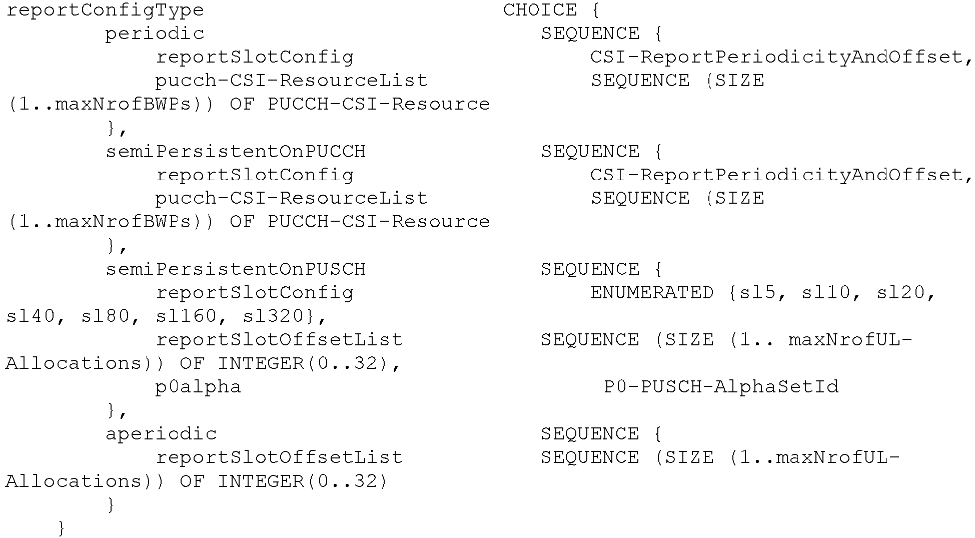

Moreover, further implementations of the improved prediction results reporting procedure, which can be combined with any of the other described implementations, provide a new reporting timing for the prediction reporting based on a prediction-event trigger. The prediction-dedicated configuration can additionally configure one or more prediction events for triggering the transmission of the prediction report.

For example, the prediction event defines one or more conditions such as:
- a serving beam serving the UE being predictively worse than a threshold,
- a non-serving beam being predictively better than a serving beam serving the UE, and
- a beam failure will predictively occur in a future time instance.

Correspondingly, the UE may predict the beam characteristics, as explained in any one of the implementation of the improved prediction result reporting procedure, and may then determine whether any one of these prediction reporting events (particularly the conditions defined for the event) is fulfilled, based on the relevant predicted beam characteristics.

When determining that a prediction event is fulfilled, the UE triggers the preparation and transmission of the prediction report.

In a 3GPP-related implementation, the new prediction event can be part of the *CSI-ReportConfig* Information Element:

```
 reportConfigType-rxx ::= CHOICE {
  event Triggered PredictionEventTriggerConfig, ... }
```

In the above definition, rxx means the release version of the technical standard, e.g. r18 for Release 18, r19 for Release 19, etc. The parameter "PredictionEventTiggerConfig" provides the detailed prediction-based event configuration, e.g. including the triggering conditions such as serving beam is predictively worse than a threshold (with or without offset), non-serving beam is predictively better than the serving beam (with or without offset), beam failure will predictively occur in a future time instance, etc.

Based on the above new prediction event triggering, further implementations of the improved prediction results reporting procedure involve an additional filtering operation when determining whether one prediction event is fulfilled. A known disadvantage of such event triggering is that in certain scenarios, unnecessary prediction reports are triggered, e.g. due to fast fading situations and due to an outlier of the prediction.

According to the present improved implementation, the UE, after having obtained the prediction results for the beam characteristics, can first perform a filtering operation on said predicted beam characteristics, so as to facilitate reducing the number of triggering of unnecessary prediction report transmission. This allows to reduce the reporting overhead by avoiding unnecessary reporting trigger.

The filtering operation can be implemented in several different manners, e.g. in the time or spatial domain. A time-domain filtering may involve, e.g. averaging the relevant predicted characteristics of a beam across multiple time instances, e.g. OFDM symbols, slots, subframes. A spatial-domain filtering may involve, e.g. averaging the relevant predicted characteristics of a beam across multiple beams. The spatial-domain filtering can be used to obtain a representative value of the cell quality and may thus also be for a cell-level event trigger.

In the above explained implementations of the improved prediction results reporting procedure, it was described how the UE can report the prediction results to the base station, e.g. following a reporting timing as for the measurement reporting (e.g. aperiodic, periodic or semi-persistently). Correspondingly, the reporting timing for transmitting the prediction results is controlled by the base station.

Moreover, further implementations of the improved prediction results reporting procedure, which can be combined with any of the other described implementations, provide an improvement for such a control of the reporting timing. This present implementation relies on that the UE is able to obtain a recommended report timing for the reporting of the prediction results, out of the prediction.

For instance, the recommended report timing can be a periodicity of the prediction reporting, or a aperiodic sequence of reporting instances.

In one example, the prediction model for predicting the beam characteristics can also output such a recommended report timing. So as to allow such a prediction, the prediction model might require certain information about the UE, the environment or the beams, including e.g.
- the velocity of the UE, or
- information on the screen of the UE (e.g. whether the UE screen is currently on or off, and/or the duration of the off-state of the UE screen and/or the duration of the on-state of the UE screen), or
- information on (data) traffic occurring at the UE.

Alternatively, rather than transmitting such a recommended report timing, this implementation also provides for transmitting the predicted application time of a beam (also known as dwelling time) to the base station, or a sequence of beams having associated the predicted application time of each beam. With such predicted beam application time, the base station can determine a more suitable report timing configuration for the UE. For example, for periodic reporting, a conservative scheduling approach could set the periodicity to be the minimum value of beam application time associated with the sequence of predicted future beams. In such way, the base station can obtain an updated report whenever the current serving beam becomes obsolete. As another example, the base station can trigger aperiodic reporting right before the application time of the current beam expires.

According to one option, this recommended report timing can be one of the prediction characteristics mentioned above, configured by the prediction-dedicated configuration information.

Providing the recommended report timing to the base station has the advantage that it is possible that the report timing of prediction results can be adjusted to the situation at the UE.

### First Variant - new prediction characteristics

The first variant is based on the above description of the improved prediction result reporting procedure (see e.g. Fig. 12 to 16) and provides additional and more detailed information for the case that the prediction-dedicated configuration information configures the prediction characteristics of a beam that are to be reported to the base station.

According to an exemplary implementation of the first variant, the prediction characteristics include one or more of:
- a predicted beam identification,
- a predicted beam quality, such as reference signal received power, RSRP, reference signal received quality, RSRQ, signal to interference plus noise ratio, SINR, and signal to noise ratio, SNR,
- a predicted timestamp or application time of a beam,
- a confidence level of the predicted prediction characteristics, and
- a predicted quality of more than one beams.

The prediction characteristics are determined by the UE, e.g. using a suitable AI/ML model, following the prediction-dedicated configuration.

For instance, the beam ID can be predicted and output in association with other prediction characteristics. As the beam ID, it is possible to report one or more of a synchronization signal block identifier, SSB ID, a reference signal resource identifier (e.g. the CSI-RS-Index), and a transmission configuration indication state identifier, TCI state ID. Additionally, a new beam ID can be introduced as well for said purpose.

The predicted beam quality can be similar to the corresponding measured beam quality known from measurement reporting.

The predicted timestamp or application time of a beam represents information on when the beam becomes suitable and/or unsuitable for the UE. It is e.g. dependent on the speed of the UE, the cell and beam environment, the mobility state of the UE, etc. all of which can be taken into account by the prediction. The base station can make use of such information to decide on whether to switch the UE's serving beam. For example, for the reported beam associated with a very short application time, the base station may decide not to switch the serving beam and rather to stick to the current serving beam in order to save signaling overhead and potentially avoid interruption of ongoing communication due to the switching. Further, the base station may use such information to optimize the reporting timing configuration, as discussed above.

The confidence level can be configured by the base station so as to obtain a degree of how good the prediction is deemed to be, and can be used by the base station during the beam management. For instance, if the confidence level is below a threshold, the base station might not use predicted characteristics or may then trigger further measurements so as to obtain actual measurement results instead of or in addition to the prediction results.

The predicted quality of more than one beam can be obtained for example by predicting separately the quality of beams and averaging the predicted quality. It can be e.g. assumed that the plural beams belong to the same cell, such that it is thus possible to obtain a representative predicted quality on the cell-level, which is the more representative the more beams of the cell are used for the averaging.

The base station may determine which prediction characteristics are to be predicted and reported by the UE and correspondingly may generate the prediction-dedicated configuration information by indicating the corresponding prediction characteristics. This determination at the base station can be performed for instance by taking into account which information is necessary for the beam management.

In one example, the prediction configuration might configure the UE to only report the predicted beam ID of one beam, which can be the best beam (e.g. having the best beam quality among all predicted beams) or can be the recommended beam (e.g. can be different from a best beam). This information is enough to allow the base station to easily identify the most suitable beam to use for the UE, while at the same time not creating a lot of overhead for the prediction reporting.

As another example, the prediction configuration might configure the UE to report, for one or several beams, the predicted beam ID together with a predicted beam quality. This information can be used by the base station for the beam management, e.g. to determine a suitable beam for the UE (not necessarily the best beam).

Other example combination of prediction characteristics are equally possible.

An exemplary 3GPP-directed implementation of the first variant can be based on part of the CSI measurement reporting framework that is already defined in 3GPP for beam management, e.g. as explained above. In one example, the definition of the prediction characteristics can be made as part of *the CSI-ReportConfig* Information Element, being part of the CSI framework as explained above. In particular, the following parameters can be introduced within the *CSI-ReportConfig:*

```
 reportQuantity-rxx ::= CHOICE {
  predicted-beam ID NULL,
  Predicted-ssb-Index NULL,
  Predicted-csi-RS-lndex NULL,
  predicted-cri-RSRP NULL,
  predicted-ssb-Index-RSRP NULL,
  predicted-beam-application-timestamp NULL,
  confidence-level NULL, ... }
```

In the above definition, rxx means the release version of the technical standard, e.g. r18 for Release 18, r19 for Release 19, etc.

The above-listed *"predicted-beam ID", "Predicted-ssb-Index",* and *"Predicted-csi-RS-Index"* can be used to identify a beam, and the gNB can decide which one or more of these parameters shall be predicted and reported by the UE.

As already explained before, when considering that the prediction-dedicated configuration information configures the prediction characteristics, the first variant of the improved prediction result reporting procedure may involve re-using some parameters from the measurement-related configuration, as necessary.

According to an exemplary 3GPP-directed implementation, this might include the re-use of the measurement-related parameters of the radio resource set, including the *CSI-ResourceConfig, NZP-CSI-RS-ResourceSet, CSI-IM-ResourceSet,* and *CSI-SSB-ResourceSet* and the lEs *NZP-CSI-RS-Resource, CSI-IM-Resource,* and/or *SSB-Index* from 3GPP TS 38.331. These 3GPP parameters also define the beams for which the prediction has to be performed.

As another example, the re-used measurement-related parameter could be those defining how and when to report the measurements, such as the *reportConfigType, CSI-ReportPeriodicityAndOffset,* etc.

### Second Variant - new reporting set of beams

The second variant is based on the above description of the improved prediction result reporting procedure (see e.g. Fig. 12 to 16) and provides additional and more detailed information for the case that the prediction-dedicated configuration information configures the reporting set of beams.

According to an exemplary implementation of the second variant, the beams of the reporting set of beam are respectively identified by suitable identification information included in the prediction-dedicated configuration information. There are several possibilities to identify a beam, e.g. one or more of a synchronization signal block identifier, SSB ID, a reference signal resource identifier (e.g. the CSI-RS-Index), and a transmission configuration indication state identifier, TCI state ID. As another possibility, a new beam ID can be introduced as well for said purpose.

As still a further possibility, identifying a beam for prediction can also be done by defining a separate resource set for prediction, in addition to the resource set that might already be configured for measurement. In particular, following conceptually a 3GPP implementation, the configuration of a resource set also identifies the beam to which the radio resources of said resource set refer. Consequently, by defining a prediction-dedicated resource set for prediction (e.g. in addition to or instead of a measurement-related resource set), it is possible to identify a beam of the reporting set of beams. The prediction-dedicated resource set and the measurement-related resource set can be identified by different resource set IDs, even when actually referring to the same beam.

For such a possibility, a new tag or label can be introduced into the resource set definition, by which it is possible to identify the resource set as being either for measurement or for prediction. Instead of using a tag or label, a particular resource set ID number (e.g. ID=0) or order of in the sequence of resource sets can be predefined and may thus implicitly allow for identifying the resource set as being either for measurement or for prediction.

The prediction-dedicated configuration thus clearly identifies for which beams the base station expects to receive prediction results, rather than measurement results.

In the above explanations of the improved prediction result reporting procedure, it was explained that the prediction is performed for a first set of beams. It should be noted that in this second variant, the first set of beams, used for the prediction at the UE, can be the same or include more beams that what the prediction-dedicated reporting set of beams defines. Put the other way round, the reporting set of beams can be a subset of the first set of beams.

Consequently, the UE performs, if possible, the prediction at least with regard to those beams identified by the configured prediction parameter "reporting set of beams". However, for different reasons, the prediction can be performed for further beams as well, even though the reporting of the prediction results is then limited to those prediction results related to the beams among the configured reporting set of beams.

Following from the above, a scenario may occur where the beam recommended by the prediction is among the first set of beams (used for prediction) but not among the reporting set of beams that are to be reported. Consequently, the actually-recommended beam cannot be reported to the base station because it is not among the configured reporting beam set. Instead, a beam, among the reporting beam set, is reported which is less optimal than according to the prediction. In such a case, the prediction report may be extended by the UE to also indicate the existence of a better beam than the reported beam (and might optionally also or instead include the predicted beam ID of said beam). The base station can thus learn that there is a better beam than recommended, and may use this information e.g. to optimize the reporting set of beams.

The base station may determine for which beams the UE should provide prediction results (instead of the measurement results) and correspondingly may generate the prediction-dedicated configuration information by identifying the determined beams. According to one example implementation, even if the UE has been configured for reporting measurements for a beam, but the UE receives the prediction-dedicated configuration information identifying said beam for prediction, the UE is not required to perform the measurements for said beam but instead can predict the characteristics of the beam and then report the predicted beam characteristics to the base station.

The base station can be able to distinguish the prediction results as being the result of a prediction rather than the result of a measurement by taking into account the beam to which the received prediction results relate and knowing whether a beam was previously configured for prediction or not.

As a further option, the prediction report may additionally include an identification or indication together with the predicted characteristics so as to allow the base station to distinguish the prediction results as being the result of a prediction rather than the result of a measurement. This facilitates the distinction between prediction results and measurement results at the base station.

Such an additional identification can be useful, where the beam ID is not indicated or where the beam ID, even if indicated, does not unambiguously allow for such a distinction between prediction results and measurement results for the recipient of the report. Such a scenario may occur e.g. when the beams of the reporting set for prediction are identified by use of a resource set definition and when the same beam is configured for measurement reporting and prediction reporting. In said case, an additional identification allows the base station to distinguish whether the received results have been determined by measurement or by prediction. In one example, the additional identification can be a resource set ID, which allows to identify unambiguously a resource set, even in case two resource sets for the same beam are defined for measurement and prediction, respectively.

An exemplary 3GPP-directed implementation of the second variant can be based on part of the CSI measurement reporting framework that is already defined in 3GPP for beam management, e.g. as explained above. In one example, identifying the prediction beams can be done based on the one or more resource sets defined by the *CSI-ReportConfig* IE, particularly by the CSI-*ResourceConfig, NZP-CSI-RS-ResourceSet, CSI-IM-ResourceSet,* and *CSI-SSB-ResourceSet* and the lEs *NZP-CSI-RS-Resource, CSI-IM-Resource,* and/or *SSB-Index* from 3GPP TS 38.331. The definition of the resource sets according to this 3GPP framework not only identifies the radio resources used by the base station to transmit the reference signal via the beam but also identifies the beam.

As already explained before, when considering that the prediction-dedicated configuration information configures the reporting set of beams, the second variant of the improved prediction result reporting procedure may involve re-using some parameters from the measurement-related configuration, as necessary.

According to an exemplary 3GPP-directed implementation, this might include the re-use of the measurement-related parameters of the radio resource set, including the parameter *reportquantity* (e.g. indicating cri-RI-PMI-CQI, cri-RI-i1, cri-R1-i1-CQI, cri-RI-CQI, cri-RSRP, ssb-Index-RSRP, cri-RI-LI-PMI-CQI...).

As another example, the re-used measurement-related parameter could be those defining how and when to report the measurements, such as the *reportConfigType, CSI-ReportPeriodicityAndOffset,* etc.

### Third variant - Both prediction characteristics and reporting set of beams

The above first and second variants of the improved prediction result reporting procedure can be combined as well, such that the prediction-dedicated configuration configures both prediction characteristics and the reporting set of beams.

### Further Variant - Inter-cell beam prediction

In the Release 17 of 5G NR MIMO enhancement, inter-cell beam management (ICBM) has been introduced. Correspondingly, the UE is able to be configured by its serving cell to measure DL Tx beams from neighbouring cells. The UE then reports the inter-cell beam measurements to the serving cell. These neighbouring cell beams can also be associated with an SSB or CSI-RS.

In the current Release 18 of 5G NR, L1-L2-triggered mobility (LTM) is being discussed, according to which the UE is firstly configured with a set of candidate cells, and then, a MAC CE (and/or possibly a DCI) triggers the UE to switch its serving cell among the candidate cells. Similar to Release 17 ICBM, the UE can measure and report the beams of a set of configured candidate cells. Based on such a report, the base station may decide to handover the UE to one of the candidate cells.

Based on the present variant of the improved prediction result reporting procedure, the UE can be configured to report prediction results for beams of one or more neighbouring cells (i.e. non-serving cells). In more detail, the prediction-dedicated configuration would configure the reporting set of beams so as to also indicate one or more beams of one or more neighbouring cells, for which the UE is to predict and report beam characteristics. For instance, the prediction-dedicated configuration would indicate a beam ID as well as a cell ID to unambiguously identify each beam and the corresponding cell.

The UE, in accordance therewith, not only is able to predict characteristics of a beam of its serving cell, but is also able to predict and report characteristics of a beam of a neighbouring cell.

The reporting of the prediction results for beams of a neighbouring cell might also provide that the prediction report includes a suitable identification of the neighbour/serving cell to which the prediction results relate.

For the inter-cell beam prediction, any measurement results performed by the UE for beams of the neighbour cells can be used as well for the prediction of beam characteristics, in a similar manner as done for the prediction of beams of the serving cell. Further, although it is not necessary, but in order to improve the quality of the prediction for a neighbouring cell, the prediction model might be trained in advance with information on said neighbouring cell, such as the beam pattern/configuration or spatial relation of beams of the neighbour cell etc. This is especially useful when the configurations of the neighbouring cell such as the base station antenna configuration, Tx power configuration, etc, are quite different from the serving cell.

The base station, when receiving such beam characteristics for a neighbour cell, can use them e.g. for inter-cell beam management or for L1-L2-triggered mobility. For example, if one of the beams from the neighbouring cell is predictively better than the current serving beam, the base station can decide to use the beam from the neighbouring cell for transmitting the DL control information and/or DL data (e.g. using PDSCH) without switching the serving cell and to inform UE to monitor the beam correspondingly. As another example, if multiple beams (or one metric derived from averaging multiple beams) from one of the candidate cells configured for L1-L2-triggered mobility are predictively better than pre-defined threshold(s), the base station may decide to trigger UE to handover to the candidate cell.

In one exemplary 3GPP-directed implementation, the prediction-dedicated configuration may identify the neighbour cell based on the following parameter and information of the CSI reporting framework, discussed above (see 3GPP TS38.331). In one exemplary option, for the SSB beams, the IE "*CSI-SSB-ResourceSet*" has the parameter "*ServingAddtionalPCIIndex-r17*" that provides the non-serving cell IDs to the SSB. In another exemplary option, for CSI-RS beams, UE is configured with a CSI-RS of its serving cell which would have a QCL relation to the SSB beam of a neighboring cell. This is done by providing a QCL source using the IE *"TCI-State".* For example, in IE *"NZP-CSI-RS-Resource",* a TCI-Stateld can be indicated for a CSI-RS, which points to *"additionalPCI-r17'* where the neighboring cell ID can be indicated for a SSB to be used as the QCL source of the concerned CSI-RS.

In one exemplary 3GPP-directed implementation, the prediction-report may identify the neighbour cell to which the accompanying predicted characteristics relates, based on the following parameter and information of the CSI reporting framework, discussed above (see 3GPP TS38.331). In one exemplary option, CRI or SSBRI is reported as shown in Table 6.3.1.1.2-8 from 3GPP TS 38.214, where SSBRI and CRI are used to point to a SSB of a neighboring cell and a CSI-RS QCLed with SSB of neighboring cell, respectively, as explained above.

### Further Variant - L3 mobility

In the current 3GPP 5G NR specifications, the L3 mobility (i.e. handover being triggered by RRC, such as RRC reconfiguration message) requires the UE to report a cell-level measurement quantity, such as RSRP, RSRQ, etc. of a complete cell.

According to the present variant of the improved prediction result reporting procedure, the UE can be configured to report the prediction results on a cell-level. In particular, a cell-level prediction can be determined by the UE by taking into account several or all beams of a cell, e.g. by averaging the prediction results from different beams of a given cell. The UE can use all beams or less than all beams of a cell so as to determine a cell-level prediction.

For instance, the cell-level prediction results could be a predicted value of RSRP, RSRQ, SS-SINR, CSI-SINR, E-UTRA RSRP, E-UTRA RSRQ, E-UTRA SINR, SS-RSRPB, etc. (see 3GPP TS 38.215 v17.2.0, section 5.1 and its subsections).

According to an exemplary implementation of this variant, instead of configuring the UE based on the IE *CSI-ReportConfig* (of TS 38.331), the UE may be configured for the cell-level prediction reporting for L3 mobility using the IE *ReportConfigNR* of TS 38.331. In the current 3GPP specification the *ReportConfigNR* IE specifies criteria for different triggering events. The IE *ReportConfigNR* could be extended e.g. with a parameter *MeasReportQuantity-rxx* (rxx identifiying the release, e.g. r18 or r19), which defines the prediction characteristics such as prediction-rsrp, prediction-rsrq, and prediction-sinr.

The above explanations for the improved prediction result reporting procedure were based on considering beam-level and cell-level metrics. Further variants of the improved prediction result reporting procedure could allow for the prediction and reporting of sidelink-related metrics, such as SL RSSI, SL CR, SL CBR, etc. (see 3GPP TS 38.215, section 5.1 and its subsections).

Sidelink refers to the direct link between two UEs without the detour of going via the gNB. Correspondingly, the UE can be configured with the prediction-dedicated configuration information so as to also predict and report, to the peer UE, characteristics relating to the sidelink towards the peer UE. For instance, new prediction characteristics could be defined such as the prediction-SL RSSI, prediction-SL CR, and prediction-SL CBR. The report can be sent on the corresponding PC5-RRC connection. Both UEs of the PC5-RRC connection maintain a sidelink prediction-dedicated configuration that defines at least the prediction characteristics.

### Further Aspects

According to a first aspect, a user equipment, is provided that includes the following. A receiver of the UE receives, from a base station, configuration information dedicated for prediction reporting and not for measurement reporting. The received prediction-dedicated configuration information configures one or more of:
- prediction characteristics of a beam that are to be reported from the UE to the base station, and
- a reporting set of beams identifying beams for which predicted characteristics are to be reported from the UE to the base station.

A processor of the UE predicts characteristics of a first set of beams, based on the received prediction-dedicated configuration information. A transmitter of the UE transmits, to the base station, a prediction report including the predicted characteristics of one or more beams.

According to a second aspect provided in addition to the first aspect, the receiver receives measurement-related configuration information, wherein the received measurement-related configuration information configures:
- measurement characteristics of a beam that are to be reported from the UE to the base station, and
- for each beam of a second set of beams, radio resources for measuring the measurement characteristics.

The processor performs measurements on the radio resources of the second set of beams so as to determine the measurement characteristics, based on the received measurement-related configuration information. In one optional implementation, the transmitter transmits, to the base station, a measurement report including the measured measurement characteristics of one or more beams of the second set of beams. In another optional implementation, the measurement-related configuration information is separate from the prediction-dedicated configuration information. In another optional implementation, the processor, when predicting the characteristics of the first set of beams, uses results of the measurements performed on the second set of beams.

According to a third aspect provided in addition to the first or second aspects, if the prediction-dedicated configuration information configures the prediction characteristics, the processor predicts the configured prediction characteristics and the prediction report includes the predicted prediction characteristics of the one or more beams. In an optional implementation, the prediction characteristics include one or more of:
- a predicted beam identification,
- a predicted beam quality, such as reference signal received power, RSRP, reference signal received quality, RSRQ, signal to interference plus noise ratio, SINR, and signal to noise ratio, SNR,
- a predicted timestamp or application time of a beam,
- a confidence level of the predicted prediction characteristics, and
- a predicted quality of more than one beams.

According to a fourth aspect provided in addition to any one of the first to third aspects, the processor, when predicting the prediction characteristics, re-uses parameters that are configured for measuring the measurement characteristics of a beam, including one or more of:
the radio resources for measuring the measurement characteristics. In one optional implementation, the radio resources for measuring the measurement characteristics are identified by a resource set ID.

In one optional implementation, the reporting of the prediction results re-uses one or more parameters that are configured for reporting a measurement report that includes measured measurement characteristics.

In one optional implementation, the re-used parameters include one or more of:
- Information for which beams the measured measurement characteristics are to be reported to the base station,
- timing of reporting the measurement results, for instance a periodicity of reporting, a semi-persistently-configured radio resource allocation of reporting, and
- a format of the measurement report.

According to a fifth aspect, provided in addition to any one of the first to fourth aspects, beams of the reporting set of beams are identified based on identification information in the received prediction-dedicated configuration information. In an optional implementation, the identification information of the beam is one or more of a synchronization signal block identifier, SSB ID, a reference signal resource identifier, and a transmission configuration indication state identifier, TCI state ID.

In an optional implementation, the reporting set of beams is a subset of the first set of beams, optionally wherein the number of beams in the reporting set of beams is less than the number of beams in the first set of beams.

According to a sixth aspect, provided in addition to any one of the first to fifth aspects, if the prediction-dedicated configuration information configures the reporting set of beams:
- the prediction report includes the predicted characteristics for the reporting set of beams.

In an optional implementation, the prediction report includes an identification together with the predicted characteristics for the reporting set of beams so as to identify the predicted characteristics in the prediction report as being predicted and not measured. Further optionally, said identification is a set ID allocated to the reporting set of beams.

In an optional implementation, in case of reporting a recommended beam and in case the recommended beam is among the first set of beams but not among the reporting set of beams, the prediction report indicates the recommended beam among the reporting set of beams and additionally indicates the existence of a better beam than the reported recommended beam.

According to a seventh aspect, provided in addition to any one of the first to sixth aspects, in case the prediction report and the measurement report are to be transmitted at the same time instance,
- the receiver, in operation, receives an indication, from the base station, as to which one of the prediction report and the measurement report is to be transmitted by the transmitter. (further optionally, the indication is received together with an aperiodic trigger for triggering the reporting of the prediction report and the measurement report), or
- one or both of the prediction report and the measurement report include an indication that the respective report is a prediction report or a measurement report, or
- the prediction report and the measurement report are transmitted in a pre-configured order, which defines the order of transmission of a prediction report and a measurement report, or
- the processor, in operation, determines which one of the prediction report and the measurement report is to be transmitted by transmitter based on a priority rule and determines to not transmit that report with the lower priority.

According to an eighth aspect provided in addition to any one of the first to seventh aspects, the prediction-dedicated configuration information further configures:
- one or more prediction events for triggering the transmission of the prediction report.

The processor determines whether one of the one or more prediction events is fulfilled, based on the predicted characteristics. When a prediction event is fulfilled, the processor determines that a prediction report is to be transmitted.

In an optional implementation, the prediction event defines one or more conditions such as one or more of:
- a serving beam serving the UE being predictively worse than a threshold,
- a non-serving beam being predictively better than a serving beam serving the UE, and
- a beam failure will predictively occur in a future time instance.

According to a ninth aspect provided in addition to the eighth aspect, the processor, when determining whether one prediction event is fulfilled, performs first a filtering operation on the predicted characteristics of a beam so as to reduce the number of triggering of unnecessary prediction report transmissions.

In an optional implementation, the filtering operation includes one or more of:
- averaging predicted characteristics of a beam in a time domain across multiple time instances,
- averaging predicted characteristics in a spatial domain across multiple beams among the first set of beams.

According to a tenth aspect provided in addition to any one of the first to ninth aspects, the processor predicts a recommended report timing of transmitting the prediction report. The transmitter transmits the recommended report timing to the base station.

In an optional implementation, the processor, when predicting the recommended report timing, uses one or more of the following :
- velocity of the UE,
- information on a screen of the UE, optionally including one or more of whether the UE screen is on or off and of duration of off-state and/or on-state of the UE screen, and
- information on traffic occurring at the UE.

In an optional implementation, a predicted application time of a beam is predicted as the recommended report timing.

According to an eleventh aspect provided in addition to any one of the first to tenth aspects, the reporting set of beams includes one or more beams of a neighbouring cell, neighbouring a serving cell of the UE. In an optional implementation, the prediction-dedicated configuration identifies the neighbouring cell for which characteristics are to be reported.

According to a twelfth aspect, provided in addition to any one of the first to eleventh aspects, the first set of beams is a subset of the second set of beams or does not have a beam in common with the second set of beams.

In an optional implementation, the processor operates a prediction model so as to predict characteristics of the first set of beams, for instance an artificial intelligence/machine learning, AI/ML, model. In an optional implementation, the first set of beams is configured by the UE or the base station.

According to a thirteenth aspect, a method is provided comprising the following steps performed by a user equipment, UE:
receiving, from a base station, configuration information dedicated for prediction reporting and not for measurement reporting, wherein the received prediction-dedicated configuration information configures one or more of :
   - prediction characteristics of a beam that are to be reported from the UE to the base station, and
   - a reporting set of beams identifying beams for which predicted characteristics are to be reported from the UE to the base station,
predicting characteristics of a first set of beams, based on the received prediction-dedicated configuration information, and
transmitting, to the base station, a prediction report including the predicted characteristics of one or more beams.

According to a fourteenth aspect, a base station is provided comprising the following. A processor of the base station determines configuration information dedicated for prediction reporting and not for measurement reporting. The prediction-dedicated configuration information configures one or more of :
- prediction characteristics of a beam that are to be reported from the UE to the base station, and
- a reporting set of beams identifying beams for which predicted characteristics are to be reported from the UE to the base station.

A transmitter of the base station transmits the prediction-dedicated configuration information to the UE. A receiver receives from the UE a prediction report including characteristics of one or more beams, predicted by the UE based on the prediction-dedicated configuration information.

According to a fifteenth aspect, a method is provided comprising the following steps performed by a base station:
determining configuration information dedicated for prediction reporting and not for measurement reporting, wherein the prediction-dedicated configuration information configures one or more of :
   - prediction characteristics of a beam that are to be reported from the UE to the base station, and
   - a reporting set of beams identifying beams for which predicted characteristics are to be reported from the UE to the base station,
transmitting the prediction-dedicated configuration information to the UE, and
receiving from the UE a prediction report including characteristics of one or more beams, predicted by the UE based on the prediction-dedicated configuration information.

According to a sixteenth aspect, an integrated circuit is provided, which, in operation, controls a process of a user equipment, UE, the process comprising the following steps performed by the UE:
receiving, from a base station, configuration information dedicated for prediction reporting and not for measurement reporting, wherein the received prediction-dedicated configuration information configures one or more of :
   - prediction characteristics of a beam that are to be reported from the UE to the base station, and
   - a reporting set of beams identifying beams for which predicted characteristics are to be reported from the UE to the base station,
predicting characteristics of a first set of beams, based on the received prediction-dedicated configuration information, and
transmitting, to the base station, a prediction report including the predicted characteristics of one or more beams.

According to a seventeenth aspect, an integrated circuit is provided, which, in operation, controls a process of a base station, the process comprising the following steps performed by the base station:
determining configuration information dedicated for prediction reporting and not for measurement reporting, wherein the prediction-dedicated configuration information configures one or more of :
   - prediction characteristics of a beam that are to be reported from the UE to the base station, and
   - a reporting set of beams identifying beams for which predicted characteristics are to be reported from the UE to the base station,
transmitting the prediction-dedicated configuration information to the UE, and
receiving from the UE a prediction report including characteristics of one or more beams, predicted by the UE based on the prediction-dedicated configuration information.

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a receiver, which in operation receives, from a base station, configuration information dedicated for prediction reporting and not for measurement reporting, wherein the received prediction-dedicated configuration information configures one or more of :
- prediction characteristics of a beam that are to be reported from the UE to the base station, and
- a reporting set of beams identifying beams for which predicted characteristics are to be reported from the UE to the base station,
a processor, which in operation predicts characteristics of a first set of beams, based on the received prediction-dedicated configuration information, and
a transmitter, which in operation transmits, to the base station, a prediction report including the predicted characteristics of one or more beams.

2. The UE according to claim 1, wherein the receiver, in operation, receives measurement-related configuration information, wherein the received measurement-related configuration information configures:
- measurement characteristics of a beam that are to be reported from the UE to the base station, and
- for each beam of a second set of beams, radio resources for measuring the measurement characteristics
the processor, in operation, performs measurements on the radio resources of the second set of beams so as to determine the measurement characteristics, based on the received measurement-related configuration information,
optionally wherein the transmitter, in operation, transmits, to the base station, a measurement report including the measured measurement characteristics of one or more beams of the second set of beams,
optionally wherein the measurement-related configuration information is separate from the prediction-dedicated configuration information,
optionally wherein the processor, when predicting the characteristics of the first set of beams, uses results of the measurements performed on the second set of beams.

3. The UE according to claim 1 or 2, wherein if the prediction-dedicated configuration information configures the prediction characteristics, the processor predicts the configured prediction characteristics and the prediction report includes the predicted prediction characteristics of the one or more beams,
optionally wherein the prediction characteristics include one or more of:
- a predicted beam identification,
- a predicted beam quality, such as reference signal received power, RSRP, reference signal received quality, RSRQ, signal to interference plus noise ratio, SINR, and signal to noise ratio, SNR,
- a predicted timestamp or application time of a beam,
- a confidence level of the predicted prediction characteristics, and
- a predicted quality of more than one beams.

4. The UE according to any one of claims 1 to 3, wherein the processor, when predicting the prediction characteristics, re-uses parameters that are configured for measuring the measurement characteristics of a beam, including one or more of:
the radio resources for measuring the measurement characteristics, optionally wherein the radio resources for measuring the measurement characteristics are identified by a resource set ID,
optionally wherein the reporting of the prediction results re-uses one or more parameters that are configured for reporting a measurement report that includes measured measurement characteristics,
optionally wherein the re-used parameters include one or more of:
- Information for which beams the measured measurement characteristics are to be reported to the base station,
- timing of reporting the measurement results, for instance a periodicity of reporting, a semi-persistently-configured radio resource allocation of reporting, and
- a format of the measurement report.

5. The UE according to any one of claims 1 to 4, wherein beams of the reporting set of beams are identified based on identification information in the received prediction-dedicated configuration information, optionally wherein the identification information of the beam is one or more of a synchronization signal block identifier, SSB ID, a reference signal resource identifier, and a transmission configuration indication state identifier, TCI state ID,
optionally wherein the reporting set of beams is a subset of the first set of beams, optionally wherein the number of beams in the reporting set of beams is less than the number of beams in the first set of beams.

6. The UE according to any one of claims 1 to 5, wherein if the prediction-dedicated configuration information configures the reporting set of beams:
- the prediction report includes the predicted characteristics for the reporting set of beams,
optionally wherein the prediction report includes an identification together with the predicted characteristics for the reporting set of beams so as to identify the predicted characteristics in the prediction report as being predicted and not measured, optionally wherein said identification is a set ID allocated to the reporting set of beams,
optionally wherein in case of reporting a recommended beam and in case the recommended beam is among the first set of beams but not among the reporting set of beams, the prediction report indicates the recommended beam among the reporting set of beams and additionally indicates the existence of a better beam than the reported recommended beam.

7. The UE according to any one of claims 1 to 6, wherein in case the prediction report and the measurement report are to be transmitted at the same time instance,
- the receiver, in operation, receives an indication, from the base station, as to which one of the prediction report and the measurement report is to be transmitted by the transmitter, optionally wherein the indication is received together with an aperiodic trigger for triggering the reporting of the prediction report and the measurement report, or
- one or both of the prediction report and the measurement report include an indication that the respective report is a prediction report or a measurement report, or
- the prediction report and the measurement report are transmitted in a pre-configured order, which defines the order of transmission of a prediction report and a measurement report, or
- the processor, in operation, determines which one of the prediction report and the measurement report is to be transmitted by transmitter based on a priority rule and determines to not transmit that report with the lower priority.

8. The UE according to any one of claims 1 to 7, wherein the prediction-dedicated configuration information further configures:
- one or more prediction events for triggering the transmission of the prediction report,
the processor, in operation, determines whether one of the one or more prediction events is fulfilled, based on the predicted characteristics , and
when a prediction event is fulfilled, the processor determines that a prediction report is to be transmitted,
optionally wherein the prediction event defines one or more conditions such as one or more of:
- a serving beam serving the UE being predictively worse than a threshold,
- a non-serving beam being predictively better than a serving beam serving the UE, and
- a beam failure will predictively occur in a future time instance.

9. The UE according to claim 8, wherein the processor, when determining whether one prediction event is fulfilled, performs first a filtering operation on the predicted characteristics of a beam so as to reduce the number of triggering of unnecessary prediction report transmissions,
optionally wherein the filtering operation includes one or more of:
- averaging predicted characteristics of a beam in a time domain across multiple time instances,
- averaging predicted characteristics in a spatial domain across multiple beams among the first set of beams.

10. The UE according to any one of claims 1 to 9, wherein the processor predicts a recommended report timing of transmitting the prediction report, and
the transmitter, in operation, transmits the recommended report timing to the base station,
optionally wherein the processor, when predicting the recommended report timing, uses one or more of the following :
- velocity of the UE,
- information on a screen of the UE, optionally including one or more of whether the UE screen is on or off and of duration of off-state and/or on-state of the UE screen, and
- information on traffic occurring at the UE,
optionally wherein a predicted application time of a beam is predicted as the recommended report timing.

11. The UE according to any one of claims 1 to 10, wherein the reporting set of beams includes one or more beams of a neighbouring cell, neighbouring a serving cell of the UE,
optionally wherein the prediction-dedicated configuration identifies the neighbouring cell for which characteristics are to be reported.

12. The UE according to any one of claims 1 to 11, wherein the first set of beams is a subset of the second set of beams or does not have a beam in common with the second set of beams,
optionally wherein the processor operates a prediction model so as to predict characteristics of the first set of beams, for instance an artificial intelligence/machine learning, AI/ML, model,
optionally wherein the first set of beams is configured by the UE or the base station.

13. A method comprising the following steps performed by a user equipment, UE:
receiving, from a base station, configuration information dedicated for prediction reporting and not for measurement reporting, wherein the received prediction-dedicated configuration information configures one or more of :
- prediction characteristics of a beam that are to be reported from the UE to the base station, and
- a reporting set of beams identifying beams for which predicted characteristics are to be reported from the UE to the base station,
predicting characteristics of a first set of beams, based on the received prediction-dedicated configuration information, and
transmitting, to the base station, a prediction report including the predicted characteristics of one or more beams.

14. A base station comprising:
a processor, which in operation determines configuration information dedicated for prediction reporting and not for measurement reporting, wherein the prediction-dedicated configuration information configures one or more of :
- prediction characteristics of a beam that are to be reported from the UE to the base station, and
- a reporting set of beams identifying beams for which predicted characteristics are to be reported from the UE to the base station,
a transmitter, which in operation transmits the prediction-dedicated configuration information to the UE, and
a receiver, which in operation receives from the UE a prediction report including characteristics of one or more beams, predicted by the UE based on the prediction-dedicated configuration information.

15. A method comprising the following steps performed by a base station:
determining configuration information dedicated for prediction reporting and not for measurement reporting, wherein the prediction-dedicated configuration information configures one or more of :
- prediction characteristics of a beam that are to be reported from the UE to the base station, and
- a reporting set of beams identifying beams for which predicted characteristics are to be reported from the UE to the base station,
transmitting the prediction-dedicated configuration information to the UE, and
receiving from the UE a prediction report including characteristics of one or more beams, predicted by the UE based on the prediction-dedicated configuration information.
